# EUROPEAN PATENT APPLICATION

(11) **EP 2 509 144 A1**
(43) Date of publication of application: **10.10.2012**
(21) Application number: 10834377.3
(22) Date of filing: 30.11.2010
(51) Int. Cl.: H01M 8/04, H01M 8/06

(54) **POWER GENERATION SYSTEM**

(30) Priority: 01.12.2009 JP 2009273550
(71) Applicant: Panasonic Corporation, Kadoma-shi Osaka 571-8501 (JP)
(72) Inventor: MORITA, Junji, 2-1-61, Shiromi Chuo-ku, Osaka-shi Osaka 540-6207 (JP); KUSUMURA, Koichi, 2-1-61, Shiromi Chuo-ku, Osaka-shi Osaka 540-6207 (JP); NAKAMURA, Akinari, 2-1-61, Shiromi Chuo-ku, Osaka-shi Osaka 540-6207 (JP); URATA, Takayuki, 2-1-61, Shiromi Chuo-ku, Osaka-shi Osaka 540-6207 (JP)
(74) Representative: Leinweber & Zimmermann
(86) International application number: PCT/JP2010/006980
(87) International publication number: WO 2011/067923

(57) **Abstract**

Included are: a power generation unit configured to generate electric power by consuming a raw material gas that has passed through a gas meter, the gas meter being configured to, if a state where continuously stopping a flow of the raw material gas for a reset period or longer is not performed has continued for a first upper limit period or longer, exert at least one of a function of outputting an abnormality indication signal and a function of blocking the flow of the raw material gas; a raw material gas supply device configured to supply the raw material gas to the power generation unit; and a controller. The controller is configured to: perform a raw material gas supply operation of supplying the raw material gas from the raw material gas supply device to the power generation unit in a case of performing normal stopping of a power generation operation; and stop the power generation operation, and stop the raw material gas supply operation until at least the reset period elapses, in a case where gas supply abnormality in which said state continues for a second upper limit period or longer has occurred, the second upper limit period being shorter than the first upper limit period.

## Description

### Technical Field

The present invention relates to a power generation system, and particularly to a power generation system using a commercial gas as a raw material gas.

### Background Art

One of the examples of power generation systems using a commercial gas as a raw material gas include a power generation system using a fuel cell. The fuel cell converts chemical energy of a fuel directly into electrical energy, thereby generating electric power.

Conventional fuel cell systems include a reformer and cause a reforming reaction of a raw material gas containing a hydrocarbon as a main component, thereby generating a hydrogen-rich fuel gas. The generated fuel gas and oxygen in air are electrochemically reacted with each other in a fuel cell. As a result, electric power is obtained.

City gas, LPG, kerosene, or the like is used as the raw material gas, for example. In the case of using such a fuel cell system for household use, a commercial gas such as city gas or LPG is mainly used as the raw material gas.

The source of the commercial gas such as city gas or LPG (a gas supply port at home, e.g., a main cock) is provided with a microcomputer meter as a safety device.

In general, such a gas meter cuts off the gas when detecting any of the following: an earthquake that measures 5 or higher on the Japanese seismic intensity scale; a rapid decrease in the gas pressure; a flow of the gas for a long period of time (e.g., 30 days or longer) at a flow rate of a predetermined value or greater (such a flow of the gas indicates an occurrence of gas leakage); and a rapid increase in the amount of gas usage. Among microcomputer meters, there is one that outputs a gas leakage warning when having detected that the gas has been flowing for a long period of time (e.g., 30 days or longer) at a flow rate of a predetermined value or greater. There is also a microcomputer meter that performs both cutting off the gas and outputting a warning.

In a case where a fuel cell system is used for household use, the fuel cell system is supplied with a raw material gas via such a microcomputer meter as described above in a manner similar to other gas appliances. The fuel cell system, unlike other general gas appliances, consumes the raw material gas in accordance with household power loads. If power loads occur continuously, then the consumption of the raw material gas may continue for a long period of time (e.g., 30 days or longer), accordingly. In this case, even though the fuel cell system is operating in a normal manner, the microcomputer meter erroneously detects an occurrence of abnormality, and as a result, cuts off the gas or outputs a warning.

In order to overcome the above problem, a fuel cell system has been proposed, which includes a control apparatus configured to maintain, based on a schedule of electric power consumption measured by power consumption measuring means, a fuel cell unit to be in a stopped state for a second predetermined period before a first predetermined period elapses after the start of an operation of the fuel cell unit (see Patent Literature 1, for example).

Meanwhile, there is a proposed technique of purging the inside of a reformer and a fuel cell with a raw material gas when a fuel cell system is stopped (see Patent Literature 2, for example).

Further, there is a proposed system configured to perform, when a fuel cell system is stopped, a pressure compensation operation of supplying a raw material gas to a reformer and a fuel cell when a pressure decrease occurs in the reformer and the fuel cell (see Patent Literature 2 and Patent Literature 3, for example).

### Citation List

### Patent Literature

PTL 1: Japanese Laid-Open Patent Application Publication No. 2005-353292
PTL 2: Japanese Laid-Open Patent Application Publication No. 2003-229156
PTL 3: Japanese Laid-Open Patent Application Publication No. 2006-210019

### Summary of Invention

### Technical Problem

However, even though a power generation operation of a fuel cell system is stopped in a manner similar to that of the fuel cell system disclosed in Patent Literature 1 in order to avoid that the microcomputer meter cuts off the gas or gives an abnormality notification, if a raw material gas supply operation exemplified by raw material purging or a pressure compensation operation is performed as disclosed in Patent Literatures 2 and 3 when the power generation operation is stopped, then the period over which the power generation operation is stopped becomes prolonged. The reason for this is that performing the raw material gas supply operation makes it difficult to maintain, for the second predetermined period or longer, the fuel cell system to be in a state where the raw material gas is not used. Not only fuel cell systems but also any other power generation systems generating electric power by using a raw material gas share this problem.

The present invention solves the above conventional problems. An object of the present invention is to provide a power generation system that performs a predetermined raw material gas supply operation when its power generation operation is stopped and that is capable of reducing, as compared to conventional power generation systems, a power generation operation stopped period which is a period for avoiding that the microcomputer meter cuts off the gas or gives an abnormality notification.

### Solution to Problem

In order to solve the above-described problems, a power generation system according to the present invention includes: a power generation unit configured to generate electric power by consuming a raw material gas that has passed through a gas meter, the gas meter being configured to, if a state where continuously stopping a flow of the raw material gas for a reset period or longer is not performed has continued for a first upper limit period or longer, perform at least one of outputting an abnormality indication signal and blocking the flow of the raw material gas; a raw material gas supply device configured to supply the raw material gas to the power generation unit; and a controller. The controller is configured to: perform a raw material gas supply operation of supplying the raw material gas from the raw material gas supply device to the power generation unit in a case of performing normal stopping of a power generation operation; and stop the power generation operation, and stop the raw material gas supply operation until at least the reset period elapses, in a case where gas supply abnormality in which said state continues for a second upper limit period or longer has occurred, the second upper limit period being shorter than the first upper limit period.

A power generation system operation method according to the present invention includes: generating, by a power generation unit, electric power by consuming a raw material gas that has passed through a gas meter, the gas meter being configured to, if a state where continuously stopping a flow of the raw material gas for a reset period or longer is not performed has continued for a first upper limit period or longer, perform at least one of outputting an abnormality indication signal and blocking the flow of the raw material gas; performing a raw material gas supply operation of supplying the raw material gas from a raw material gas supply device to the power generation unit in a case of performing normal stopping of a power generation operation; and stopping the power generation operation of the power generation unit, and stopping the raw material gas supply operation until at least the reset period elapses, in a case where gas supply abnormality in which said state continues for a second upper limit period or longer has occurred, the second upper limit period being shorter than the first upper limit period.

The above object, other objects, features, and advantages of the present invention will be made clear by the following detailed description of preferred embodiments with reference to the accompanying drawings.

### Advantageous Effects of Invention

The present invention with the above-described configuration allows a fuel cell system that performs the predetermined raw material gas supply operation when its power generation operation is stopped to become capable of reducing, as compared to conventional power generation systems, the power generation operation stopped period which is a period for avoiding that the microcomputer meter cuts off the gas or gives an abnormality notification.

### Brief Description of Drawings

[Fig. 1] Fig. 1 shows an example of a schematic configuration of a power generation system according to Embodiment 1.
[Fig. 2] Fig. 2 shows an example of a schematic configuration of a power generation system according to Embodiment 2.
[Fig. 3] Fig. 3 is a flowchart showing an example of operations of a power generation system 50.
[Fig. 4] Fig. 4 is a flowchart showing an example of a gas supply abnormality determination operation performed by the power generation system according to Embodiment 2.
[Fig. 5] Fig. 5 is a flowchart showing an example of a stop operation performed by the power generation system according to Embodiment 2.
[Fig. 6] Fig. 6 is a flowchart showing an example of a pressure compensation operation that the power generation system according to Embodiment 2 performs on a reformer by using a raw material gas.
[Fig. 7] Fig. 7 is a flowchart showing an example of a raw material gas purge operation performed by a power generation system according to Variation 1 of Embodiment 2.
[Fig. 8] Fig. 8 is a flowchart showing an example of a pressure compensation operation using air, performed by a power generation system according to Variation 2 of Embodiment 2.
[Fig. 9] Fig. 9 is a flowchart showing an example of a pressure compensation operation using steam, performed by a power generation system according to Variation 3 of Embodiment 2.
[Fig. 10] Fig. 10 is a flowchart showing an example of a pressure compensation operation that a power generation system according to Embodiment 3 performs on a fuel cell by using the raw material gas.
[Fig. 11] Fig. 11 is a flowchart showing an example of a raw material gas purge operation performed by a power generation system according to Variation 1 of Embodiment 3.
[Fig. 12] Fig. 12 shows an example of a schematic configuration of a power generation system according to a variation of Embodiment 2.
[Fig. 13] Fig. 13 is a flowchart showing an example of a pressure compensation operation that a power generation system according to Embodiment 4 performs on a fuel cell body by using the raw material gas.

### Description of Embodiments

### (Embodiment 1)

A power generation system according to Embodiment 1 includes: a power generation unit configured to generate electric power by consuming a raw material gas that has passed through a gas meter, the gas meter being configured to, if a state where continuously stopping a flow of the raw material gas for a reset period or longer is not performed has continued for a first upper limit period or longer, perform at least one of outputting an abnormality indication signal and blocking the flow of the raw material gas; a raw material gas supply device configured to supply the raw material gas to the power generation unit; and a controller. The controller is configured to: perform a raw material gas supply operation of supplying the raw material gas from the raw material gas supply device to the power generation unit in a case of performing normal stopping of a power generation operation; and stop the power generation operation, and stop the raw material gas supply operation until at least the reset period elapses, in a case where gas supply abnormality in which said state continues for a second upper limit period or longer has occurred, the second upper limit period being shorter than the first upper limit period.

A power generation system operation method according to Embodiment 1 includes: generating, by a power generation unit, electric power by consuming a raw material gas that has passed through a gas meter, the gas meter being configured to, if a state where continuously stopping a flow of the raw material gas for a reset period or longer is not performed has continued for a first upper limit period or longer, perform at least one of outputting an abnormality indication signal and blocking the flow of the raw material gas; performing a raw material gas supply operation of supplying the raw material gas from a raw material gas supply device to the power generation unit in a case of performing normal stopping of a power generation operation; and stopping the power generation operation of the power generation unit, and stopping the raw material gas supply operation until at least the reset period elapses, in a case where gas supply abnormality in which said state continues for a second upper limit period or longer has occurred, the second upper limit period being shorter than the first upper limit period.

According to the above configuration, the power generation system, which performs the predetermined raw material gas supply operation when its power generation operation is stopped, is capable of reducing, as compared to conventional power generation systems, the power generation operation stopped period which is a period for avoiding that the microcomputer meter cuts off the gas or gives an abnormality notification. Accordingly, the power generation system can be started more speedily than conventional power generation systems.

The above "flow of the raw material gas" refers to the raw material gas flow that passes through the gas meter.

A controller configured to determine whether or not "a state where continuously stopping a flow of the raw material gas for a reset period or longer is not performed has continued for a first upper limit period or longer", and to instruct the gas meter to "perform at least one of outputting an abnormality indication signal and blocking the flow of the raw material gas", may be disposed at any position. For example, the controller may be incorporated in the gas meter, or in an external control center that monitors and controls the operations of the gas meter, or in the power generation system.

The above normal stopping refers to stopping of the power generation system, which is different from abnormal stopping in which the power generation operation of the power generation system is stopped due to an occurrence of abnormality in the power generation system. In general, the normal stopping refers to, for example, stopping the power generation system when an operator has inputted an operation stop instruction, or stopping the power generation system when, in a case where an operation stop time is preset by using a timer, the operation stop time has arrived and thereby a stop instruction is outputted.

To "stop the power generation operation", which is mentioned above, refers to stopping extracting electric power from the power generation unit.

The above raw material gas supply operation does not include raw material supply performed for power generation. The raw material gas supply operation includes operations that are performed after the power generation is stopped.

The power generation system may be configured such that communication between a gas passage in the power generation unit and the atmosphere is blocked when the power generation operation is stopped, and the raw material gas supply operation may be a pressure compensation operation of supplying, when a pressure decrease occurs in the gas passage in the power generation unit due to a temperature decrease in the gas passage, the raw material gas from the raw material gas supply device to the gas passage, with the communication between the gas passage and the atmosphere blocked.

The power generation system operation method may include blocking communication between a gas passage in the power generation unit and the atmosphere when the power generation operation is stopped, and the raw material gas supply operation may be a pressure compensation operation of supplying, when a pressure decrease occurs in the gas passage in the power generation unit due to a temperature decrease in the gas passage, the raw material gas from the raw material gas supply device to the gas passage, with the communication between the gas passage and the atmosphere blocked.

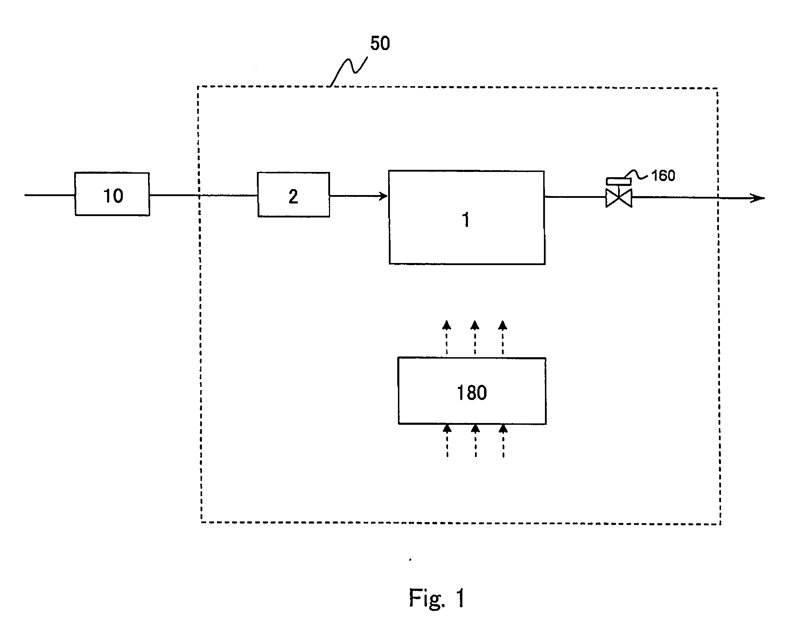

Fig. 1 shows an example of a schematic configuration of the power generation system according to Embodiment 1.

A power generation system 50 includes a power generation unit 1, a raw material gas supply device 2, a valve 160, and a controller 180.

The power generation unit 1 generates electric power by consuming a raw material gas that has passed through a gas meter 10. The power generation unit 1 is, for example, a fuel cell power generation unit or a gas engine power generation unit. The fuel cell power generation unit may include a hydrogen generator in addition to a fuel cell. The fuel cell included in the fuel cell power generation unit is not limited to a particular type. For example, the fuel cell may be a solid polymer fuel cell or a solid oxide fuel cell. The raw material gas is a gas containing an organic compound, the constituent elements of which are at least carbon and hydrogen. Examples of the raw material gas include hydrocarbon gases exemplified by natural gas, city gas, LPG gas, vaporized kerosene, etc., and alcohol gases such as methanol gas. Examples of the source of the raw material gas include a city gas infrastructure, a natural gas infrastructure, and an LPG canister.

The raw material gas supply device 2 is a device configured to supply the raw material gas to the power generation unit 1. Examples of the raw material gas supply device 2 include a pressure booster, an on-off valve, and a flow rate adjusting valve.

The valve 160 is provided on an off gas passage through which an off gas discharged from the power generation unit 1 flows. When the valve 160 is closed, communication between a gas passage in the power generation unit 1 and the atmosphere is blocked.

The controller 180 controls operations of the raw material gas supply device 2. The controller 180 may be any device, so long as the device has control functions. The controller 180 includes an arithmetic processing unit (not shown) and a storage unit (not shown) which stores a control program. The arithmetic processing unit may be an MPU or a CPU, for example. The storage unit may be a memory, for example. The controller 180 may be a single controller, or a group of multiple controllers which operate in cooperation with each other to control the fuel cell system.

The gas meter 10 is a device configured to measure a total amount of gas consumed by gas appliances used by a consumer (e.g., a household). When a state where continuously stopping a flow of the raw material gas for a reset period or longer is not performed (hereinafter, a continuous flow state) has continued for a period (hereinafter, a continuous flow period), and if the continuous flow period is longer than or equal to a first upper limit period, then the gas meter 10 performs at least one of outputting an abnormality indication signal and blocking the flow of the raw material gas. The reset period is set to, for example, 1 hour. The first upper limit period is set to, for example, 30 days.

The gas meter includes therein a controller that is configured to determine whether or not "a state where continuously stopping a flow of the raw material gas for a reset period or longer is not performed has continued for a first upper limit period or longer", and to instruct the gas meter to "perform at least one of outputting an abnormality indication signal and blocking the flow of the raw material gas". In other words, the gas meter exerts at least one of a function of outputting the abnormality indication signal and a function of blocking the flow of the raw material gas. The outputting of the abnormality indication signal and the blocking of the flow of the raw material gas are performed if the state where continuously stopping the flow of the raw material gas for the reset period or longer is not performed has continued for the first upper limit period or longer.

The gas meter 10 cumulatively measures a raw material flow continuously stopped period. The raw material flow continuously stopped period is a period over which stopping the flow of the raw material gas continues (i.e., a period over which the flow of the raw material gas is stopped continuously). If the continuous flow period of the raw material supply has become longer than or equal to a reset period tr, then the gas meter 10 resets the continuous flow period of the raw material gas to zero.

Next, an example of operations of the power generation system 50 is described.

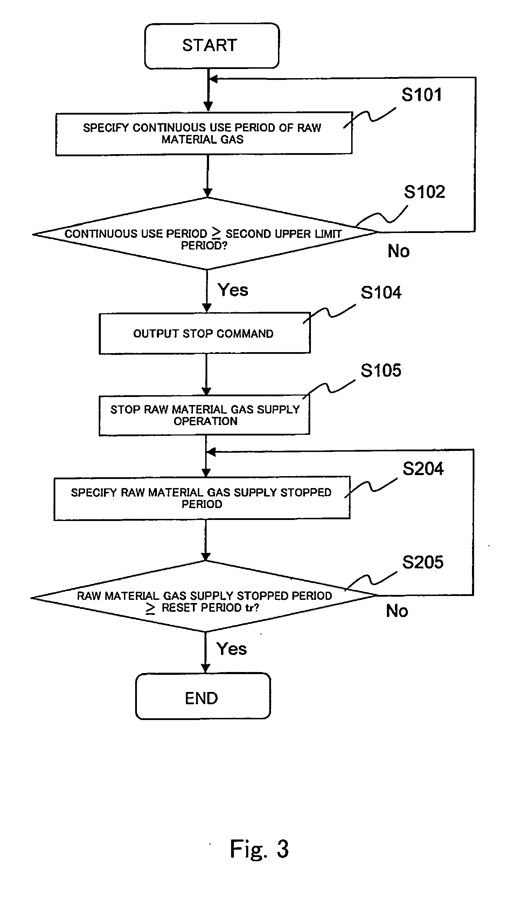

Fig. 3 is a flowchart showing an example of operations of the power generation system 50.

As shown in Fig. 3, the controller 180 specifies a continuous use period of the raw material gas, over which period the power generation system 100 continuously uses the raw material gas (step S101).

Here, the use of the raw material gas by the power generation system 100 is detected by a raw material gas flow meter (not shown) configured to detect the flow rate of the raw material gas supplied to the power generation unit 1.

The continuous use period of the raw material gas herein refers to a period over which a state where stopping the supply of the raw material gas for the reset period tr or longer is not performed (i.e., a raw material gas continuously used state) continues. Obtained as the continuous use period of the raw material gas is, for example, a difference between a raw material gas supply start time, which is stored in a storage device and at which the supply of the raw material gas to the power generation unit 1 was started, and the current time at which it is determined that the current state is the raw material gas continuously used state. The raw material gas supply start time is specified in the following manner: after the raw material gas continuously used state has ended, the controller 180 specifies, based on values obtained by the raw material gas flow meter and a timekeeper (not shown), a time at which the raw material gas supply to the power generation unit 1 was started, as the raw material gas supply start time.

It should be noted that the continuous use period of the raw material gas may be reset by stopping the raw material gas supply for the reset period.

When the continuous use period of the raw material gas is specified, it is determined whether or not the continuous use period of the raw material gas is longer than or equal to a second upper limit period (i.e., whether or not gas supply abnormality is occurring) (step S102). Here, the second upper limit period is set to a value less than that of the first upper limit period. If the continuous use period of the raw material gas is shorter than the second upper limit period (No in step S102), the flow returns to step S101 in which the continuous use period is specified again.

If the continuous use period of the raw material gas is longer than or equal to the second upper limit period (Yes in step S102), the controller 180 outputs a stop command (step S104), and thereafter, stops a raw material gas supply operation of supplying the raw material gas to the power generation unit 1 (step S105).

Hereinafter, the raw material gas supply operation is described.

First, when a power generation operation of the power generation system 50 is stopped, the raw material gas supply to the power generation unit 1 is stopped and the valve 160 is closed. Thereafter, heat is radiated to the atmosphere, and thereby a temperature decrease occurs. Accordingly, the pressure in a gas passage of the power generation system 50 decreases. Then, with the valve 160 closed, the raw material gas is supplied to the gas passage from the raw material gas supply device 2, and thereby the pressure decrease in the gas passage is compensated for (hereinafter, this operation is referred to as a pressure compensation operation).

It should be noted that the timing of supplying the raw material gas from the raw material gas supply device 2 to the gas passage in the power generation unit 1 may be set to any timing. For example, the raw material gas supply device 2 may repeatedly supply the raw material gas each time a decrease occurs in a detection value of a pressure detector (not shown) configured to detect the pressure in the gas passage of the power generation unit 1. Alternatively, in place of the pressure detector, a detector configured to indirectly detect a pressure decrease in the gas passage may be used. For example, the pressure decrease may be indirectly detected based on a decrease in a detection value of a temperature detector, or may be indirectly detected based on an elapsed period measured by a timekeeper that has elapsed after the power generation unit 1 is sealed off by closing the valve 160.

After step S105, a period over which stopping the raw material gas supply to the power generation unit 1 is continued after the stop command is outputted from the controller 180 (i.e., a raw material gas supply stopped period) is specified (step S204). Obtained as the raw material gas supply stopped period is, for example, a difference between a time (raw material gas supply stop start time), which is stored in a storage device and at which stopping the raw material gas supply to the power generation unit 1 was started, and the current time at which it is determined that the stopping of the raw material gas supply is continuing. The raw material gas supply stop start time is specified in the following manner: based on values obtained by the raw material gas flow meter and a timekeeper (not shown), the controller 180 specifies, as the raw material gas supply stop start time, a time at which the raw material gas supply to the power generation unit 1 was stopped after the outputting of the stop command from the controller 180.

Next, it is determined whether or not the raw material gas supply stopped period is longer than or equal to the reset period tr of the gas meter 10 (step S205). If the raw material gas supply stopped period is longer than or equal to the reset period tr (Yes in step S205), the stopping of the raw material gas supply operation is ended (END). If the raw material gas supply stopped period is shorter than the reset period tr (No in step S205), the flow returns to step S204 in which the raw material gas supply stopped period is specified again, and stops the raw material gas supply operation until the raw material gas supply stopped period becomes longer than or equal to the reset period tr.

According to the above flow of operations, when gas supply abnormality has occurred, the power generation system 50 stops the power generation operation. Here, the power generation system 50 also stops the raw material gas supply operation of supplying the raw material gas to the power generation unit until at least the reset period tr elapses, and it is expected that the continuous flow period of the raw material gas at the gas meter 10 is reset to zero. Accordingly, the power generation operation stopped period for avoiding that the microcomputer meter cuts off the gas or gives an abnormality notification can be made shorter as compared to conventional power generation systems in which, when gas supply abnormality has occurred, a predetermined raw material gas supply operation after the stop of the power generation operation is performed in the same manner as in normal stopping. This consequently makes it possible to start the power generation system more speedily than conventional power generation systems, thereby improving the starting performance of the power generation system.

In the above power generation system 50, the continuous flow period of the raw material gas at the gas meter 10 is indirectly measured by measuring the continuous use period of the raw material gas in the power generation unit 1. However, this is merely an example. Any direct or indirect measurement method may be used for measuring the continuous flow period of the raw material gas.

As one example, a flow rate sensor incorporated in the gas meter 10 may directly measure the continuous flow period. As another example, the continuous flow period may be indirectly measured based on a parameter value that is proportional to the continuous use period of the raw material gas. Examples of such a parameter include: a power generation period of the power generation system; and a supply period of a fluid that is supplied to the power generation unit at the time of power generation but is different from the raw material gas. In a case where the power generation unit is a fuel cell power generation unit, the fluid that is supplied to the power generation unit at the time of power generation but is different from the raw material gas is, for example, an oxidizing gas supplied to the fuel cell or water supplied to the hydrogen generator. In a case where the power generation unit is a gas engine power generation unit, the fluid is combustion air supplied to the gas engine, for example.

The reset period tr of the gas meter 10 is stored in a storage device of the controller 180, for example. It should be noted that using the reset period tr of the gas meter 10 directly in the determination in step S204 is not essential. A predetermined time period threshold longer than the reset period tr may be used, and the raw material gas supply operation may be stopped until the predetermined time period threshold elapses. The reason for this is that even if the raw material gas supply to the power generation unit is stopped during the raw material gas supply stopped period, there is still a possibility that the raw material gas is used in the period in a case where the consumer uses other gas consuming appliances. Here, it is preferred that the predetermined time period threshold is set to, for example, such a period that the use of the other gas consuming appliances is expected to be continuously stopped for the reset period tr or longer (e.g., 12 hours).

It should be noted that in a period after the stopping of the raw material gas supply operation is ended and before the next start-up request is generated, the raw material gas supply operation may be either performed or not. Here, "start-up request is generated" means, for example, any of the following: the user operates an operation unit (not shown) to give an operation start instruction to the power generation system; a preset power generation operation start time arrives; and a power load demand reaches or exceeds a threshold at or above which the power generation operation of the power generation system is required to be performed.

### [Variation 1]

In a power generation system according to Variation 1, the raw material gas supply operation is a supplementary gas supply operation of supplying the raw material gas from the raw material gas supply device to the gas passage in the power generation unit when gas contraction occurs in the gas passage due to a temperature decrease in the gas passage.

In a power generation system operation method according to Variation 1, the raw material gas supply operation is a supplementary gas supply operation of supplying the raw material gas from the raw material gas supply device to the gas passage in the power generation unit when gas contraction occurs in the gas passage due to a temperature decrease in the gas passage.

The power generation system 50 according to Variation 1 is different from the power generation system 50 according to Embodiment 1 in that the power generation system 50 according to Variation 1 is configured without including the valve 160, such that the gas passage in the power generation unit 1 is in communication with the atmosphere. Other than this difference, the configuration of the power generation system 50 according to Variation 1 is the same as that of the power generation system 50 according to Embodiment 1. Therefore, the description of the same configuration is omitted.

Hereinafter, operations of the power generation system 50 according to Variation 1 are described.

First, when the power generation operation of the power generation system 50 is stopped, heat is radiated to the atmosphere, and thereby a temperature decrease occurs. Accordingly, gas contraction occurs in the gas passage of the power generation system 50. Since the gas passage in the power generation unit 1 is open to the atmosphere, air from the atmosphere flows into the gas passage. However, the air that has flowed into the gas passage is discharged to the atmosphere by supplying the raw material gas from the raw material gas supply device 2 to the gas passage. In this manner, the amount of air inflow into the gas passage in the power generation unit 1 is reduced, and accordingly, the degree of oxidation degradation of components used in the gas passage (e.g., pipes or catalysts) in the power generation unit 1 is reduced, which is preferable.

It should be noted that the timing of supplying the raw material gas from the raw material gas supply device 2 to the gas passage in the power generation unit 1 may be any timing. For example, the raw material gas supply device 2 may repeatedly operate to supply the raw material gas each time a detection value of a temperature detector (not shown) provided at the power generation unit 1 decreases.

### [Variation 2]

In a power generation system according to Variation 2, the raw material gas supply operation is a raw material gas purge operation of purging the gas passage in the power generation unit with the raw material gas.

In a power generation system operation method according to Variation 2, the raw material gas supply operation is a raw material gas purge operation of purging the gas passage in the power generation unit with the raw material gas.

Other than the above feature, the configuration of the power generation system according to Variation 2 may be the same as that of either of the power generation systems according to Embodiment 1 and Variation 1 of Embodiment 1.

Hereinafter, operations of the power generation system 50 according to Variation 2 are described.

First, when the power generation operation of the power generation system 50 is stopped, the raw material gas supply to the power generation unit 1 is stopped and the valve 160 is closed. Thereafter, the valve 160 is opened at a predetermined timing, and the raw material gas supply device 2 is operated to purge residual gas from the inside of the gas passage of the power generation unit 1 by using the raw material gas (hereinafter, referred to as a raw material gas purge operation).

It should be noted that the timing of performing the raw material gas purge operation may be any timing. For example, the controller 180 may perform control in a manner that the raw material gas purge operation is performed when a temperature detected by the temperature detector (not shown) provided at the power generation unit 1 becomes such a temperature as not to cause carbon deposition even if the raw material gas is supplied. In the above-described example, the power generation system 50, which includes the valve 160, performs the raw material gas purge operation. However, as an alternative, the power generation system 50 need not include the valve 160 to perform the raw material gas purge operation.

In Embodiment 1 and Variations 1 and 2 of Embodiment 1, the pressure compensation operation using the raw material gas, the supplementary raw material gas supply operation, and the raw material gas purge operation are described as raw material gas supply operations. However, these operations are merely examples. The raw material gas supply operation is not limited to these operations, but may be any other raw material gas supply operation.

### [Variation 3]

In a power generation system according to Variation 3, the controller is configured to open, at least while the raw material gas supply operation is stopped due to the gas supply abnormality, a valve configured to block the communication between the gas passage in the power generation unit and the atmosphere, so as to supply air to the gas passage when the pressure decrease due to the temperature decrease in the gas passage occurs.

A power generation system operation method according to Variation 3 includes opening, at least while the raw material gas supply operation is stopped due to the gas supply abnormality, a valve configured to block the communication between the gas passage in the power generation unit and the atmosphere, so as to supply air to the gas passage when the pressure decrease due to the temperature decrease in the gas passage occurs.

Other than the above feature, the configuration of the power generation system according to Variation 3 may be the same as that of either of the power generation systems according to Embodiment 1 and Variation 2 of Embodiment 1.

Hereinafter, operations of the power generation system 50 according to Variation 3 are described.

In the power generation system 50 according to Variation 3, when the power generation operation of the power generation system 50 is stopped, the raw material gas supply to the power generation unit 1 is stopped and the valve 160 is closed. Thereafter, heat is radiated to the atmosphere, and thereby a temperature decrease occurs. Accordingly, the pressure in the gas passage of the power generation system 50 decreases. Therefore, the valve 160 is opened to allow external air to flow into the gas passage, and thereby the pressure decrease in the gas passage is compensated for. It should be noted that the timing of opening the valve 160 to supply external air into the gas passage in the power generation unit 1 may be any timing. For example, the raw material gas supply device 2 may repeatedly supply the raw material gas each time a decrease occurs in a detection value of the pressure detector (not shown) configured to detect the pressure in the gas passage of the power generation unit 1. Alternatively, in place of the pressure detector, a detector configured to indirectly detect a pressure decrease in the gas passage may be used. For example, the pressure decrease may be indirectly detected based on a decrease in a detection value of a temperature detector, or may be indirectly detected based on an elapsed period measured by a timekeeper that has elapsed after the power generation unit 1 is sealed off by closing the valve 160.

### [Variation 4]

A power generation system according to Variation 4 includes a steam supply device configured to supply steam. The power generation system is configured such that the communication between the gas passage in the power generation unit and the atmosphere is blocked when the power generation operation is stopped. The controller is configured to cause, while the raw material gas supply operation is stopped due to the gas supply abnormality, the steam supply device to supply steam to the gas passage in the power generation unit, with the communication between the gas passage and the atmosphere blocked, when the pressure decrease due to the temperature decrease in the gas passage occurs.

A power generation system operation method according to Variation 4 includes: blocking the communication between the gas passage in the power generation unit and the atmosphere when the power generation operation is stopped; and while the raw material gas supply operation is stopped due to the gas supply abnormality, supplying steam to the gas passage in the power generation unit, with the communication between the gas passage and the atmosphere blocked, when the pressure decrease due to the temperature decrease in the gas passage occurs.

Other than the above features, the configuration of the power generation system according to Variation 4 may be the same as that of either of the power generation systems according to Embodiment 1 and Variation 2 of Embodiment 1.

Hereinafter, operations of the power generation system 50 according to Variation 4 are described.

The power generation system 50 according to Variation 4 further includes a steam supply device (not shown) as compared to the power generation system 50 according to Embodiment 1. Other than this difference, the configuration of the power generation system 50 according to Variation 4 is the same as that of the power generation system 50 according to Embodiment 1. Therefore, the description of the same configuration is omitted.

In the power generation system 50 according to Variation 4, when the power generation operation of the power generation system 50 is stopped, the raw material gas supply to the power generation unit 1 is stopped and the valve 160 is closed. Thereafter, heat is radiated to the atmosphere, and thereby a temperature decrease occurs. Accordingly, the pressure in the gas passage of the power generation system 50 decreases. Therefore, with the valve 160 closed, steam is supplied from the steam supply device to the gas passage, and thereby the pressure decrease in the gas passage is compensated for. It should be noted that the timing of supplying the steam from the steam supply device may be any timing. For example, the steam supply device may repeatedly supply the steam each time a decrease occurs in a detection value of the pressure detector (not shown) configured to detect the pressure in the gas passage of the power generation unit 1. Alternatively, in place of the pressure detector, a detector configured to indirectly detect a pressure decrease in the gas passage may be used. For example, the pressure decrease may be indirectly detected based on a decrease in a detection value of a temperature detector, or may be indirectly detected based on an elapsed period measured by a timekeeper that has elapsed after the power generation unit 1 is sealed off by closing the valve 160.

### (Embodiment 2)

A power generation system according to Embodiment 2 is configured such that, in the power generation system according to Embodiment 1, the power generation unit includes: a hydrogen generator configured to generate a hydrogen-containing fuel gas by using the raw material gas; and a fuel cell configured to generate electric power by using the fuel gas supplied from the hydrogen generator. The power generation system according to Embodiment 2 is configured such that a pressure compensation operation is performed on a gas passage of the hydrogen generator.

A power generation system operation method according to Embodiment 2 is such that the power generation system operation method according to Embodiment 1 includes: generating, by a hydrogen generator, a hydrogen-containing fuel gas by using the raw material gas; generating, by a fuel cell, electric power by using the fuel gas; and performing a pressure compensation operation on a gas passage of the hydrogen generator as the raw material gas supply operation.

The power generation system may be configured such that communication between a gas passage in the power generation unit and the atmosphere is blocked when the power generation operation is stopped. In the power generation system, a pressure compensation operation of supplying the raw material gas from the raw material gas supply device to the gas passage in the hydrogen generator may be performed with the communication between the gas passage in the power generation unit and the atmosphere blocked.

The power generation system operation method may include: blocking communication between a gas passage in the power generation unit and the atmosphere when the power generation operation is stopped; and performing a pressure compensation operation of supplying the raw material gas from the raw material gas supply device to the gas passage in the hydrogen generator, with the communication between the gas passage in the power generation unit and the atmosphere blocked.

The power generation system may include a valve configured to block the communication between the gas passage in the power generation unit and the atmosphere. In the power generation system, the controller may be configured to close the valve to block the communication between the gas passage and the atmosphere.

The power generation system operation method may include closing a valve configured to block the communication between the gas passage in the power generation unit and the atmosphere to block the communication between the gas passage and the atmosphere.

Other than the above features, the configuration of the power generation system according to Embodiment 2 may be the same as that of the fuel cell system according to Embodiment 1.

### [System Configuration]

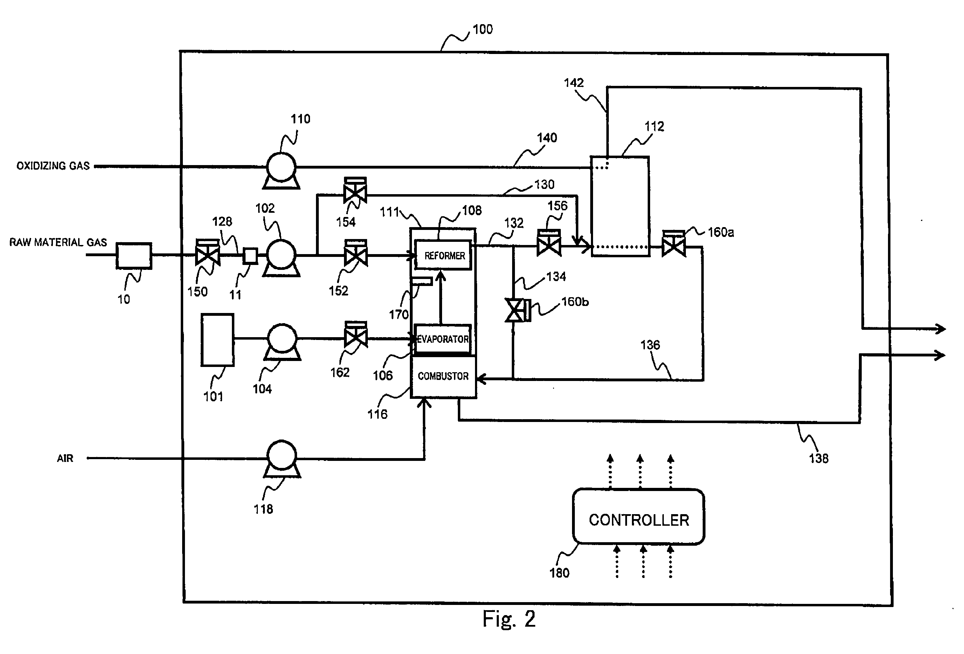

Fig. 2 shows an example of a schematic configuration of the power generation system according to Embodiment 2. It should be noted that a power generation system 100 according to the present embodiment is a fuel cell system.

As shown in Fig. 2, the power generation system 100 according to the present embodiment includes, as main components, at least a power generation unit which includes a hydrogen generator 111 and a fuel cell 112 configured to generate electric power by using a hydrogen-containing gas generated by the hydrogen generator 111. The hydrogen generator 111 includes a reformer 108. Moreover, as accessory devices for allowing the hydrogen generator 111 to perform a hydrogen generation operation, the power generation system includes the raw material gas supply device 2, a water supply device 104 and an evaporator 106 serving as a steam supply device, a combustor 116, and an air supply device 118. Furthermore, as accessory devices for allowing the fuel cell 112 to perform electric power generation, the power generation system includes an oxidizing gas supply device 110 and a DC/AC converter (not shown). In addition, the power generation system includes the controller 180 configured to controls the power generation system.

A pressure booster 102 is connected, via the gas meter 10, to a raw material gas source that has a positive supply pressure with respect to the atmosphere.

The pressure booster 102 is connected to the reformer 108 via a raw material gas passage 128. The raw material gas passage 128 is provided with a raw material gas flow meter 11. A first bypass passage 130 branches off from the raw material gas passage 128 at a position downstream from the pressure booster 102. The first bypass passage 130 bypasses the hydrogen generator 111 and is connected to a hydrogen-containing gas supply passage 132.

The hydrogen generator 111 is connected to an anode (an anode-side gas passage) of the fuel cell 112 via the hydrogen-containing gas supply passage 132. In order to reduce carbon monoxide in the hydrogen-containing gas generated by the reformer 108, the hydrogen generator 111 may include a shift converter including a shift conversion catalyst and/or a purifier including a selective oxidation catalyst.

A second bypass passage 134, which bypasses the fuel cell 112 and connects the hydrogen generator 111 and the combustor 116, is connected to the hydrogen-containing gas supply passage 132. The anode (the anode-side gas passage) of the fuel cell 112 is connected to the combustor 116 via an off fuel gas passage 136. The combustor 116 is in communication with the outside of the power generation system 100 via a flue gas passage 138 (i.e., open to the atmosphere). The oxidizing gas supply device 110 is connected to a cathode (a cathode-side gas passage) of the fuel cell 112 via an oxidizing gas supply passage 140. The cathode (the cathode-side gas passage) is in communication with the outside of the power generation system 100 via an off oxidizing gas passage 142 (i.e., open to the atmosphere).

A passage, of the raw material gas passage 128, that connects the gas meter 10 and the raw material gas flow meter 11 is provided with a first valve 150. A passage, of the raw material gas passage 128, that connects the pressure booster 102 and the reformer 108 is provided with a second valve 152 which is positioned closer to the reformer 108 than a branch point at which the first bypass passage 130 branches off from the raw material gas passage 128. The first bypass passage 130 is provided with a third valve 154. The hydrogen-containing gas supply passage 132 is provided with a fourth valve 156 which is positioned closer to the fuel cell 112 than a branch point at which the second bypass passage 134 branches off from the hydrogen-containing gas supply passage 132. The off fuel gas passage 136 is provided with a fifth valve 160a. The second bypass passage 134 is provided with a sixth valve 160b. A passage that connects the water supply device 104 and the evaporator 106 is provided with a seventh valve 162. The first valve 150, the second valve 152, the third valve 154, the fourth valve 156, the fifth valve 160a, the sixth valve 160b, and the seventh valve 162 are on-off valves (e.g., solenoid valves). Each on-off valve is configured to open and close a passage on which the on-off valve is provided. Although the raw material gas passage 128 is provided with the first valve 150 and the second valve 152, the raw material gas passage 128 may be provided with only one of the first valve 150 and the second valve 152 since such a configuration still realizes a function of allowing/blocking a flow of the raw material gas in the raw material gas passage 128. The fourth valve 156 may be eliminated from the power generation system 100 since the communication between the gas passage in the power generation unit and the atmosphere can be blocked by closing the fifth valve 160a and the sixth valve 160b. Further, the second bypass passage 134 and the sixth valve 160b may be eliminated from the power generation system. In such a case, the fifth valve 160a functions as the valve configured to block the communication between the gas passage in the power generation unit and the atmosphere.

A first temperature detector 170 configured to detect the temperature of the reformer 108 is provided near the reformer 108.

The controller 180 is communicably connected to the pressure booster 102, the water supply device 104, the oxidizing gas supply device 110, the DC/AC converter (not shown), the air supply device 118, the first valve 150, the second valve 152, the third valve 154, the fourth valve 156, the fifth valve 160a, the sixth valve 160b, and the seventh valve 162. The controller 180 includes a CPU (not shown), a timekeeper (not shown), and a storage device (not shown).

Since the configuration of the gas meter 10 is the same as in Embodiment 1, the description of the gas meter 10 is omitted.

### [Power Generation Operation]

Described below are operations that the power generation system 100 performs at the time of performing a power generation operation. The operations described below are controller by the controller 180.

At the time of performing the power generation operation, the first valve 150, the second valve 152, the fourth valve 156, the fifth valve 160a, and the seventh valve 162 are controlled to be in an opened state (i.e., they are opened), and the third valve 154 and the sixth valve 160b are controlled to be in a closed state (i.e., they are closed).

The raw material gas supplied from the raw material gas source is, after passing through the gas meter 10, supplied to the reformer 108 by the pressure booster 102. The water supply device 104 supplies the evaporator 106 with water that the water supply device 104 receives from a water tank 101. The evaporator 106 evaporates the water by using heat supplied from the combustor 116, thereby generating steam. The steam is supplied to the reformer 108. The reformer 108 generates a hydrogen-containing gas (which contains H₂ gas) by using the raw material gas supplied from the pressure booster 102 and the steam supplied from the evaporator 106. The hydrogen-containing gas serves as a fuel gas for the fuel cell 112.

The hydrogen-containing gas is supplied from the hydrogen generator 111 to the anode of the fuel cell 112. The oxidizing gas supply device 110 supplies air as an oxidizing gas to the cathode of the fuel cell 112. The fuel cell 112 allows the hydrogen-containing gas supplied from the reformer 108 to flow to the anode and allows the air supplied from the oxidizing gas supply device 110 to flow to the cathode, thereby generating electric power.

A gas discharged from the anode of the fuel cell (i.e., an off fuel gas) is supplied to the combustor 116 through the off fuel gas passage 136. The combustor 116 combusts the off fuel gas by using air supplied from the air supply device 118, thereby heating the evaporator 106 and the reformer 108. A flue gas that is discharged from the combustor 116 is discharged to the outside of the power generation system 100 through the flue gas passage 138.

An off oxidizing gas that is discharged from the cathode of the fuel cell is discharged to the outside of the power generation system 100 through the off oxidizing gas passage 142.

The DC/AC converter (not shown) converts a direct current outputted from the fuel cell 112 into an alternating current, and supplies the alternating current to an external load (not shown).

### [Determination of Gas Supply Abnormality]

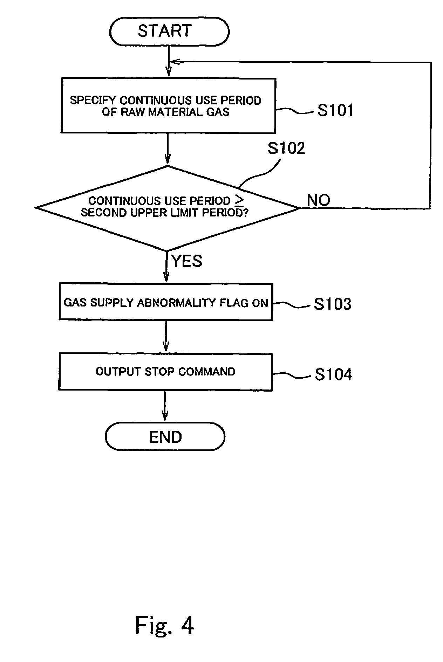

Fig. 4 is a flowchart showing an example of a gas supply abnormality determination operation performed by the power generation system according to Embodiment 2. Hereinafter, the gas supply abnormality determination operation performed by the power generation system 100 is described with reference to Fig. 4. The operation described below is controlled by the controller 180.

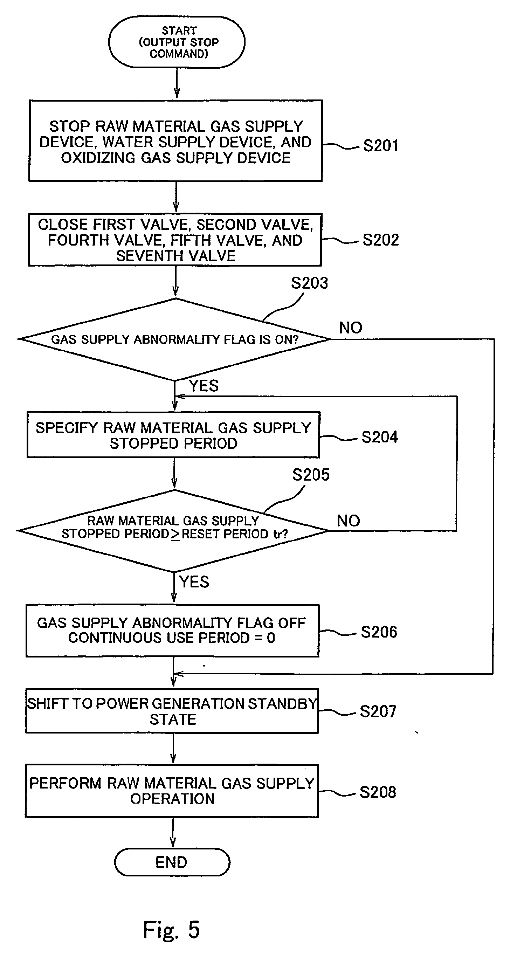

When the gas supply abnormality determination operation starts (START), the continuous use period of the raw material gas by the power generation system 100 is specified (step S101). It should be noted that, as described below, the continuous use period of the raw material gas may be reset when the raw material gas supply is stopped for the reset period (see step S205 of Fig. 5).

When the continuous use period of the raw material gas is specified, it is determined whether or not the continuous use period of the raw material gas is longer than or equal to the second upper limit period (i.e. whether or not gas supply abnormality is occurring) (step S102). If the continuous use period of the raw material gas is shorter than the second upper limit period (No in step S102), the flow returns to step S101 in which the continuous use period is specified again.

If the continuous use period of the raw material gas is longer than or equal to the second upper limit period (Yes in step S102), a gas supply abnormality flag is set to ON (step S103) and a stop command is outputted (step S104), and then the determination operation ends (END). For example, a memory element at a specific address in the storage device of the controller 180 serves as the gas supply abnormality flag (e.g., if the memory element is in an ON state, the flag is set to ON.

The above-described gas supply abnormality determination operation is performed, for example, at regular intervals while the power generation system 100 is operating (e.g., every 10 minutes).

The second upper limit period is a predetermined period (e.g., 25 days) which is set to be shorter than the aforementioned first upper limit period (e.g., shorter by five days). The second upper limit period is stored in the storage device of the controller 180.

### [Stop Operation]

Fig. 5 is a flowchart showing an example of a stop operation performed by the power generation system according to Embodiment 2. Hereinafter, the stop operation performed by the power generation system 100 is described with reference to Fig. 5. The operation described below is controlled by the controller 180.

When a stop command is outputted, electric power extraction by the DC/AC converter from the fuel cell 112 is stopped (i.e., electric power output to the external load is stopped) and the stop operation is started (START). The pressure booster 102, the water supply device 104, and the oxidizing gas supply device 110 are stopped (step S201), and the first valve 150, the second valve 152, the fourth valve 156, the fifth valve 160a, and the seventh valve 162 are closed (step S202). The third valve 154 and the sixth valve 160b are in a closed state while the power generation system 100 is operating. Therefore, by performing the operation in step S202, communication between the atmosphere and a gas passage in the reformer 108 and a gas passage in the fuel cell 112 is fully blocked in conjunction with stopping of the power generation operation.

Next, it is determined whether the gas supply abnormality flag is ON (step S203).

If the gas supply abnormality flag is not ON, the power generation system 100 shifts to a power generation standby state (step S207). Thereafter, during a period until a start-up request is generated, a predetermined raw material gas supply operation (here, a pressure compensation operation using the raw material gas) of supplying the raw material gas to the power generation unit 1 is performed as necessary (step S208). It should be noted that the pressure compensation operation using the raw material gas will be described below in detail. The "power generation standby state" herein refers to a state that allows the start-up of the power generation system to be started promptly when a start-up request for the power generation system is generated. Accordingly, even if the above raw material gas supply operation, which is performed when the power generation operation is stopped, is not performed, the start-up of the power generation system is still started.

If the above gas supply abnormality flag is ON, the above raw material gas supply operation is stopped. Then, a period elapsed after the raw material gas supply to the power generation unit is stopped in step S201, in which period the stopping of the raw material gas supply continues (i.e., the raw material gas supply stopped period), is specified (step S204).

Next, the raw material gas supply operation stands by until the raw material gas supply stopped period becomes longer than or equal to the reset period tr of the gas meter 10 (step S205). The reset period tr of the gas meter 10 is stored in the storage device of the controller 180, for example. It should be noted that it is not essential to directly use the reset period tr of the gas meter 10 for the determination performed in step S204. A predetermined time period threshold that is longer than the reset period tr may be used, such that the raw material gas supply operation stands by until the predetermined time period threshold elapses.

When the standby is completed, the gas supply abnormality flag is set to OFF and the continuous use period of the raw material gas is reset to zero (step S206). Then, the power generation system 100 shifts to the power generation standby state (step S207). Thereafter, during a period until a start-up request is generated, the predetermined raw material gas supply operation is performed as necessary (step S208).

### [Pressure Compensation Performed on Hydrogen Generator by Using Raw Material Gas]

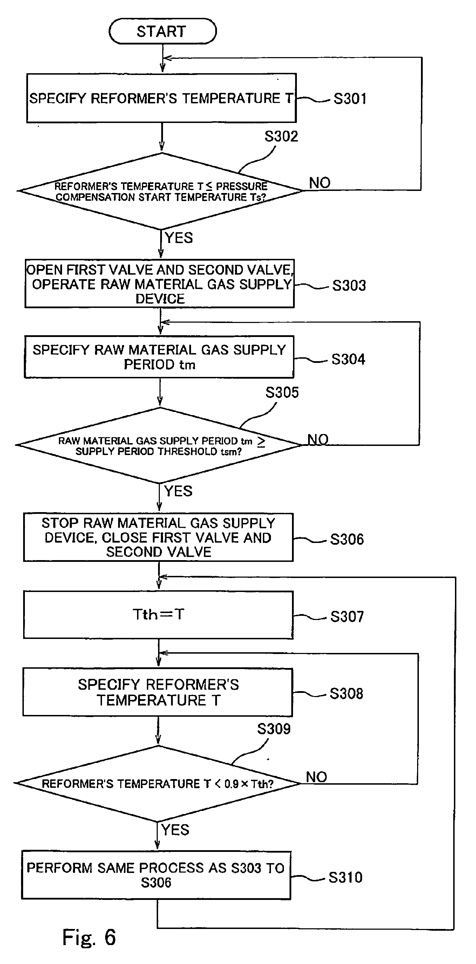

Fig. 6 is a flowchart showing an example of a pressure compensation operation that is performed in a case where the power generation system according to Embodiment 2 is configured to perform, as the raw material gas supply operation, a pressure compensation operation on the hydrogen generator by using the raw material gas. Hereinafter, the pressure compensation operation performed on the hydrogen generator by using the raw material gas is described with reference to Fig. 6. The operation described below is controlled by the controller 180.

When a stop process of the power generation operation of the power generation system is completed and the power generation system has shifted to the power generation standby state (i.e., START), the reformer's temperature T is specified by using the first temperature detector 170 (step S301), and it is determined whether or not the reformer's temperature T is lower than or equal to a pressure compensation start temperature Ts (step S302). The pressure compensation start temperature Ts is a preset temperature, which is used to determine whether it is necessary or unnecessary to start performing a pressure compensation operation on the gas passage in the reformer 108 by using the raw material gas (i.e., determine whether it is necessary or unnecessary to start supplying the gas to compensate for a pressure decrease in the reformer that is caused due to a decrease in the temperature of the reformer). The pressure compensation start temperature Ts is stored in the storage device of the controller 180. The pressure compensation start temperature Ts may be suitably set depending on the negative pressure withstanding strength of the hydrogen generator, for example.

If the determination result in step S302 is No, the flow returns to step S301.

If the determination result in step S302 is Yes, the first valve 150 and the second valve 152 are opened with the fifth valve 160a and the sixth valve 160b closed (step S303). Accordingly, the raw material gas is supplied through the raw material gas passage 128 to a gas passage in the hydrogen generator 111 including the reformer 108. In this case, the first valve 150 and the second valve 152 correspond to the raw material gas supply device, which performs the raw material gas supply operation. Also, the fifth valve 160a and the sixth valve 160b correspond to the valve configured to block the communication between the gas passage in the power generation unit and the atmosphere. It should be noted that when the raw material gas is supplied to the reformer 108 in the pressure compensation operation, the pressure booster 102 may be operated in addition to opening the first valve 150 and the second valve 152. In this case, the first valve 150, the second valve 152, and the pressure booster 102 correspond to the raw material gas supply device, which performs the raw material gas supply operation.

Then, a raw material gas supply period tm is specified (step S304). The raw material gas supply period tm is, for example, a period elapsed after the first valve 150 and the second valve 152 are opened. For example, the controller 180 obtains, by using the timekeeper, a time at which step S303 is performed (i.e., raw material gas supply start time) and stores the time in the storage device; and the controller 180 obtains, as the raw material gas supply period tm, a difference between the stored raw material gas supply start time and the current time that is obtained by using the timekeeper at the time of making a determination.

Next, it is determined whether or not the raw material gas supply period tm is longer than or equal to a supply period threshold tsm (step S305). For example, the supply period threshold tsm may be set in the following manner: the amount of raw material gas that needs to be supplied to the reformer 108 in order to compensate for a pressure decrease in the reformer 108 is obtained based on, for example, the degree of pressure decrease that has occurred in the reformer 108, the volume of the passage in the reformer, and the strength of a sealed portion; and the obtained amount of raw material gas is divided by the flow rate of the raw material gas in a case where the first valve 150 and the second valve 152 are opened.

If the determination result in step S305 is No, the flow returns to step S304.

If the determination result in step S305 is Yes, the first valve 150 and the second valve 152 are closed (step S306), and the reformer's temperature T is stored as a determination temperature Tth (step S307).

Next, the reformer's temperature T is specified by using the first temperature detector 170 (step S308). Then, it is determined whether T is lower than 0.9 Tth (step S309).

If the determination result in step S309 is No, the flow returns to step S308.

If the determination result in step S309 is Yes, the operations in steps S303 to S306 are performed again. Thereafter, the flow returns to step S307.

Although in the above example the reformer's temperature is used as a physical quantity for indirectly detecting a pressure decrease in the hydrogen generator 111, the pressure decrease in the hydrogen generator 111 may be detected in a different manner. For example, the pressure decrease in the hydrogen generator 111 may be indirectly detected based on a period elapsed after an operation of sealing the hydrogen generator 111 by using valves (such as step S202 or step S306) is performed. Alternatively, a pressure detector may be provided in the reformer 108, and the pressure decrease in the hydrogen generator 111 may be directly detected.

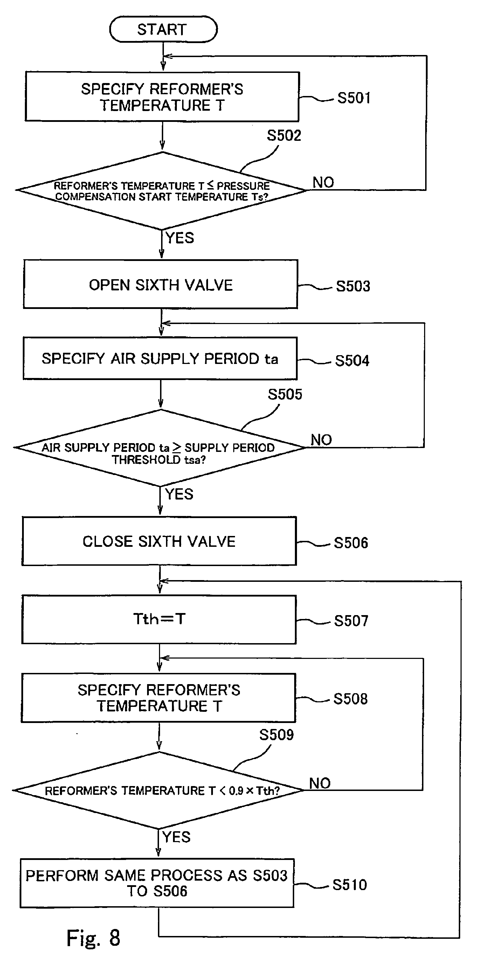

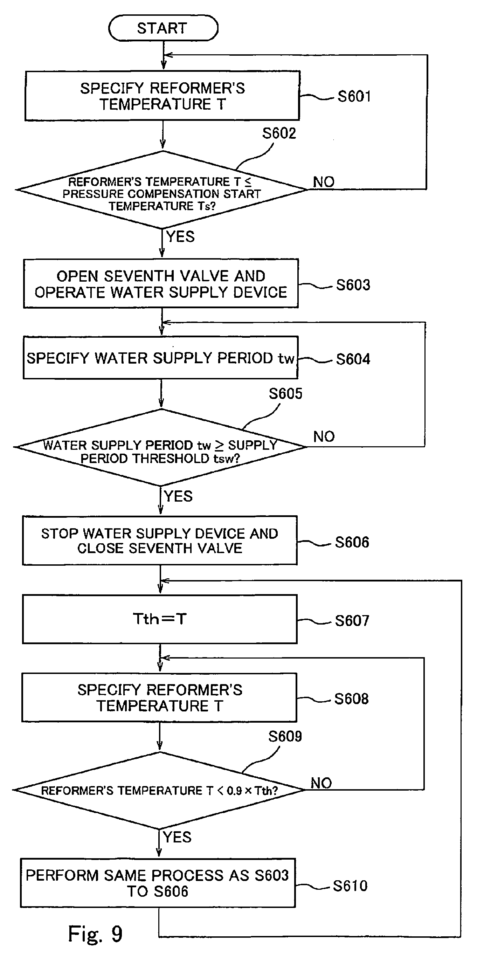

In the above-described example, the pressure compensation operation is performed on the hydrogen generator by using the raw material gas. However, if gas supply abnormality has occurred, the pressure compensation operation may be performed on the hydrogen generator by using air or steam, which will be described below (see Fig. 8 and Fig. 9).

By performing the above-described pressure compensation operation, damage to the reformer 108 that is caused due to a difference between the internal and external pressures of the reformer 108 when the power generation operation is stopped can be suppressed.

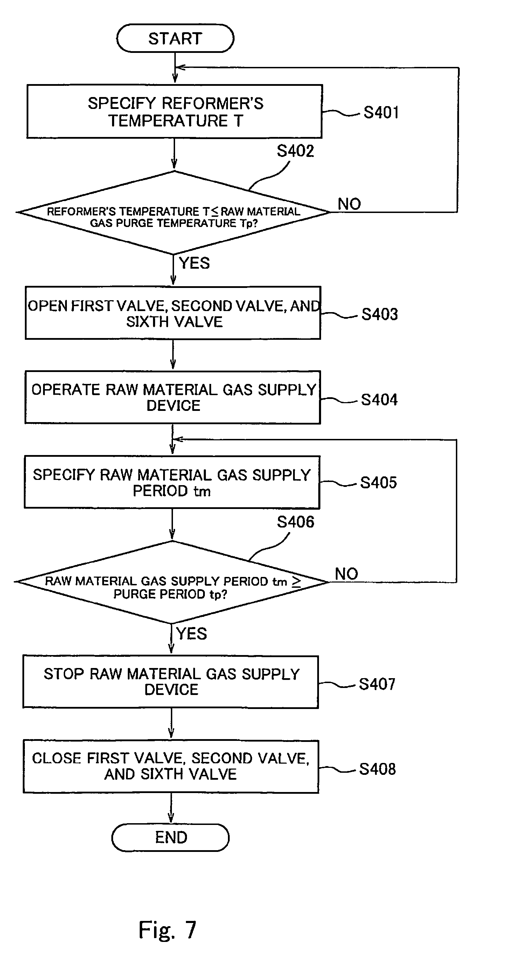

In the above-described configuration, the pressure compensation operation using the raw material gas is performed as necessary when the power generation system has shifted to a standby state after the raw material gas supply operation is stopped for the reset period or longer due to gas supply abnormality. However, as an alternative, a raw material gas purge operation (see Fig. 7) of purging the gas passage in the hydrogen generator with the raw material gas may be performed without performing the pressure compensation operation.

### [Advantageous Effects]

According to the power generation system of the present embodiment, the power generation operation stopped period for avoiding that the microcomputer meter cuts off the gas or gives an abnormality notification can be made shorter as compared to conventional power generation systems in which the pressure compensation operation using the raw material gas is not forcibly stopped.

### [Variation 1: Purging Hydrogen Generator with Raw Material Gas]

A power generation system according to Variation 1 is configured such that, in the power generation system according to Embodiment 1, the power generation unit includes: a hydrogen generator configured to generate a hydrogen-containing fuel gas by using the raw material gas; and a fuel cell configured to generate electric power by using the fuel gas supplied from the hydrogen generator. The power generation system according to Variation 1 is configured such that a raw material gas purge operation is performed on a gas passage of the hydrogen generator as the raw material gas supply operation.

A power generation system operation method according to Variation 1 is such that the power generation system operation method according to Embodiment 1 includes: generating, by a hydrogen generator, a hydrogen-containing fuel gas by using the raw material gas; generating, by a fuel cell, electric power by using the fuel gas supplied from the hydrogen generator; and performing a raw material gas purge operation on a gas passage of the hydrogen generator as the raw material gas supply operation.

In the above power generation system, the controller may be configured to perform a raw material gas purge operation of purging the gas passage in the power generation unit with the raw material gas in a case where restarting is not to be performed after stopping the raw material gas supply operation for the reset period or longer due to the gas supply abnormality.

The power generation system operation method may include performing a raw material gas purge operation of purging the gas passage in the power generation unit with the raw material gas in a case where restarting is not to be performed after stopping the raw material gas supply operation for the reset period or longer due to the gas supply abnormality.

According to the above configuration, the raw material supply operation is stopped for the reset period or longer. Accordingly, an occurrence of the gas supply abnormality is suppressed. Also, water blockage in the gas passage in the power generation unit, which is caused when a temperature decrease occurs while the power generation system is standing ready for restarting, is suppressed by performing the raw material gas purge.

Other than the above features, the configuration of the power generation system according to Variation 1 may be the same as that of the power generation system according to Embodiment 2.

Hereinafter, an example of the power generation system according to Variation 1 is described.

The power generation system 100 according to Variation 1 performs, as the raw material gas supply operation to be performed when the power generation operation of the power generation system is stopped, not the pressure compensation operation but the raw material gas purge operation of purging, with the raw material gas, the gas passage in the power generation unit (in Variation 1, the gas passage of the hydrogen generator). Other than the raw material gas supply operation, the operations and device configuration of the power generation system 100 are the same as those previously described in the above examples. Therefore, the description of such operations and device configuration of the power generation system 100 is omitted.

Fig. 7 is a flowchart showing an example of the raw material gas purge operation performed by the power generation system according to Variation 1 of Embodiment 1. In Variation 1, purging the hydrogen generator with the raw material gas is performed as the raw material gas supply operation. Hereinafter, the raw material gas purge operation according to Variation 1 is described with reference to Fig. 7. The operation described below is controlled by the controller 180. It should be noted that the raw material gas purge operation shown in Fig. 7 is the "raw material gas supply operation" and corresponds to step S208 of Fig. 5.

When the raw material gas purge operation is started (START), the reformer's temperature T is specified by using the first temperature detector 170 (step S401), and it is determined whether or not the detected temperature T is lower than or equal to a raw material gas purge temperature Tp (step S402). The raw material gas purge temperature Tp is a preset temperature, which is used to determine whether to start purging the gas passage in the hydrogen generator 111 with the raw material gas. The raw material gas purge temperature Tp is stored in the storage device of the controller 180. Here, the raw material gas purge temperature Tp is set to such a temperature as not to cause carbon deposition from the raw material gas.

If it is determined NO in step S402, the flow returns to step S401.

If it is determined YES in step S402, the first valve 150, the second valve 152, and the sixth valve 160b are opened (step S403), and the pressure booster 102 is started to operate (step S404). As a result, the raw material gas is supplied to the gas passage in the hydrogen generator 111 including the reformer 108 (i.e., the purging with the raw material gas is started). At the time, the raw material gas supply start time is obtained by using the timekeeper and then stored in the storage device. The pressure booster 102 corresponds to the raw material gas supply device, which performs the raw material gas supply operation.

Next, the raw material gas supply period tm is specified (step S405), and it is determined whether or not the raw material gas supply period tm is longer than or equal to a purge period tp (step S406). For example, the raw material gas supply period tm may be specified in the following manner: a difference between the stored raw material gas supply start time and the current time that is obtained by using the timekeeper at the time of making a determination is obtained as the raw material gas supply period tm. The purge period tp is a predetermined period which is set such that if the raw material gas is supplied to the gas passage in the hydrogen generator 111 at a predetermined flow rate for the purge period tp, then the gas passage in the hydrogen generator 111 will be fully purged with the raw material gas. The purge period tp is stored in the storage device of the controller 180, for example.

If the determination result in step S406 is NO, the flow returns to step S405.

If the determination result in step S406 is YES, the pressure booster 102 is stopped (step S407), and the first valve 150, the second valve 152, and the sixth valve 160b are closed (step S408). Then, the raw material gas purge operation ends.

It should be noted that, in the determination as to whether the purge operation is to be ended, the use of the raw material gas supply period as a physical quantity as in steps S405 and S406 is not essential. For example, the amount of supplied raw material gas may be detected, and the determination may be performed directly based on whether or not the amount has become equal to or greater than a gas volume V 1 which is necessary for the purge.

Although in the above-described configuration the gas meter is reset when gas supply abnormality has occurred and then the raw material gas purge operation is performed, an alternative configuration may be adopted in which the raw material gas purge operation is not performed after the gas meter is reset when gas supply abnormality has occurred.

### [Variation 2: Pressure Compensation Performed on Hydrogen Generator by Using Air]

A power generation system according to Variation 2 is configured such that, either of the power generation systems according to Embodiment 2 and Variation 1 of Embodiment 2 includes a valve configured to block the communication between the gas passage in the power generation unit and the atmosphere, and the controller is configured to open the valve to supply air to the gas passage of the hydrogen generator when the pressure decrease due to the temperature decrease in the gas passage in the power generation unit occurs, at least while the raw material gas supply operation is stopped due to the gas supply abnormality.

A power generation system operation method according to Variation 2 is such that either of the power generation systems according to Embodiment 2 and Variation 1 of Embodiment 2 includes: when the power generation operation is stopped, closing a valve configured to block the communication between the gas passage in the power generation unit and the atmosphere; and opening the valve to supply air to the gas passage of the hydrogen generator when the pressure decrease due to the temperature decrease in the gas passage in the power generation unit occurs, at least while the raw material gas supply operation is stopped due to the gas supply abnormality.

According to the above configuration, while the raw material gas supply operation is stopped, a pressure decrease in the gas passage is suppressed by using air, and thereby damage to the power generation unit, and the like, are suppressed.

Other than the above features, the configuration of the power generation system according to Variation 2 may be the same as that of either of the power generation systems according to Embodiment 2 and Variation 1 of Embodiment 2.

Hereinafter, an example of the power generation system according to Variation 2 is described.

The power generation system 100 according to Variation 2 performs a pressure compensation operation on the hydrogen generator by using air while the raw material gas supply operation is stopped due to the gas supply abnormality. Other than the pressure compensation operation using air, the operations and device configuration of the power generation system 100 are the same as those previously described in the above examples. Therefore, the description of such operations and device configuration of the power generation system 100 is omitted.

For example, the pressure compensation operation using air is performed in steps S204 and S205 of Fig. 5 during a period over which the raw material gas supply operation is stopped.

Fig. 8 is a flowchart showing an example of the pressure compensation operation using air, performed by the power generation system according to Variation 2 of Embodiment 1. Hereinafter, the pressure compensation operation using air according to Variation 2 is described with reference to Fig. 8. The operation described below is controlled by the controller 180.

For example, if a determination result Yes is obtained in step S203 of Fig. 5, then the pressure compensation operation using air is started to be performed on the hydrogen generator (START) during a period over which the pressure compensation operation using the raw material gas that is performed at the normal stopping of the power generation operation is stopped. The reformer's temperature T is specified by using the first temperature detector 170 (step S501), and it is determined whether or not the reformer's temperature T is lower than or equal to the pressure compensation start temperature Ts (step S502). Since the pressure compensation start temperature Ts is as described above with reference to Fig. 6, the description thereof is omitted.

If the determination result in step S502 is No, the flow returns to step S501.

If the determination result in step S502 is Yes, the sixth valve 160b is opened (step S503). Accordingly, air is supplied to the gas passage in the hydrogen generator 108 through the flue gas passage 138, the combustor 116, the second bypass passage 134, and the hydrogen-containing gas supply passage 132.

Then, an air gas supply period ta is specified (step S504). The air gas supply period ta is, for example, a period elapsed after the sixth valve 160b is opened. For example, the controller 180 obtains, by using the timekeeper, a time at which step S503 is performed (i.e., raw material gas supply start time) and stores the time in the storage device; and the controller 180 obtains, as the air gas supply period ta, a difference between the stored raw material gas supply start time and the current time that is obtained by using the timekeeper at the time of making a determination.

Next, it is determined whether or not the air gas supply period ta is longer than or equal to a supply period threshold tsa (step S505). For example, the supply period threshold tsa may be set in the following manner: the amount of air that needs to be supplied to the hydrogen generator 111 in order to compensate for a pressure decrease in the hydrogen generator 111 is obtained based on, for example, the degree of decrease in the reformer's temperature T, the volume of the passage in the hydrogen generator, and the strength of a sealed portion; and the obtained amount of air is divided by the flow rate of air in a case where the sixth valve 160b is opened.

If the determination result in step S505 is No, the flow returns to step S504.

If the determination result in step S505 is Yes, the sixth valve 160b is closed (step S506), and the reformer's temperature T is stored as the determination temperature Tth (step S507). From step S503 to step S506, air is supplied to the gas passage in the hydrogen generator 108 to compensate for a pressure decrease in the gas passage in the hydrogen generator 108 that is caused due to a temperature decrease in the gas passage (i.e., pressure compensation operation), with the communication between the gas passage in the power generation unit and the atmosphere blocked (i.e., with the fifth valve 160a and the sixth valve 160b closed).

Next, the reformer's temperature T is specified by using the first temperature detector 170 (step S508). Then, it is determined whether T is lower than 0.9 Tth (step S509).

If the determination result in step S509 is No, the flow returns to step S508.

If the determination result in step S509 is Yes, the operations in steps S503 to S506 are performed again. Thereafter, the flow returns to step S507.

When a predetermined time period threshold that is at least equal to the reset period tr or longer has elapsed and the power generation system has shifted to a standby state, the pressure compensation operation using the raw material gas may be performed on the reformer instead of performing the pressure compensation operation using air on the reformer. Moreover, when the predetermined time period threshold that is longer than or equal to the reset period tr has elapsed, the raw material gas purge operation (see Fig. 7) may be performed without performing the above-described pressure compensation operation.

In Variation 2, the pressure compensation operation is performed even while the raw material gas supply operation is stopped. This makes it possible to more effectively reduce a possibility that the reformer 108 becomes damaged due to a difference between the internal and external pressures of the reformer 108.

### [Variation 3: Pressure Compensation Performed on Hydrogen Generator by Using Steam]

A power generation system according to Variation 3 is configured such that, in either of the power generation systems according to Embodiment 2 and Variation 1 of Embodiment 2, the communication between the gas passage in the power generation unit and the atmosphere is blocked when the power generation operation is stopped, and the controller is configured to cause, while the raw material gas supply operation is stopped due to the gas supply abnormality, the steam supply device to supply steam to the gas passage of the hydrogen generator, with the communication between the gas passage in the power generation unit and the atmosphere blocked, when the pressure decrease due to the temperature decrease in the gas passage in the power generation unit occurs.

A power generation system operation method according to Variation 3 is such that either of the power generation systems according to Embodiment 2 and Variation 1 of Embodiment 2 includes: closing a valve configured to block the communication between the gas passage in the power generation unit and the atmosphere when the power generation operation is stopped; and while the raw material gas supply operation is stopped due to the gas supply abnormality, supplying steam to the gas passage of the hydrogen generator, with the valve closed, when the pressure decrease due to the temperature decrease in the gas passage in the power generation unit occurs.

According to the above configuration, while the raw material gas supply operation is stopped, a pressure decrease in the gas passage is suppressed by using steam, and thereby damage to the power generation unit, and the like, are suppressed.

The steam supply device may be configured in any form, so long as the steam supply device is configured to supply steam to the power generation unit. For example, the steam supply device may include a water supply device and an evaporator configured to evaporate water supplied from the water supply device. A pump that serves as the water supply device may be operated to supply water to the evaporator when there is residual heat in the evaporator, and thereby resultant steam may be actively supplied. Alternatively, the steam supply device may be configured to supply steam in the following passive manner: when the evaporator and the power generation unit are in communication with each other, a pressure decrease occurs in the gas passage, and as a result, steam is sucked into the gas passage.

Other than the above features, the configuration of the power generation system according to Variation 3 may be the same as that of either of the power generation systems according to Embodiment 2 and Variation 1 of Embodiment 2.

Hereinafter, an example of the power generation system according to Variation 3 is described.

The power generation system 100 according to Variation 3 performs a pressure compensation operation on the hydrogen generator by using steam while the raw material gas supply operation is stopped due to the gas supply abnormality. Other than the pressure compensation operation using steam, the operations and device configuration of the power generation system 100 are the same as those previously described in the above examples. Therefore, the description of such operations and device configuration of the power generation system 100 is omitted.

For example, the pressure compensation operation using steam is performed in steps S204 and S205 of Fig. 5 during a period over which the raw material gas supply operation is stopped.

Fig. 9 is a flowchart showing an example of the pressure compensation operation using steam, performed by the power generation system according to Variation 3 of Embodiment 1. Hereinafter, the pressure compensation operation using steam according to Variation 3 is described with reference to Fig. 9. The operation described below is controlled by the controller 180.

For example, if a determination result Yes is obtained in step S203 of Fig. 5, then the pressure compensation operation using steam is started to be performed on the hydrogen generator (START) during a period over which the pressure compensation operation using the raw material gas that is performed at the normal stopping of the power generation operation is stopped. The reformer's temperature T is specified by using the first temperature detector 170 (step S601), and it is determined whether or not the reformer's temperature T is lower than or equal to the pressure compensation start temperature Ts (step S602). Since the pressure compensation start temperature Ts is as described above with reference to Fig. 6, the description thereof if omitted.

If the determination result in step S602 is No, the flow returns to step S601.

If the determination result in step S602 is Yes, the seventh valve 162 is opened and the water supply device 104 is started to operate, with the fifth valve 160a and the sixth valve 160b closed (step S603). Accordingly, steam is generated by the evaporator 106, and the steam is supplied to the gas passage in the hydrogen generator 111 including the reformer 108. In this case, the fifth valve 160a and the sixth valve 160b correspond to the valve configured to block the communication between the gas passage in the power generation unit and the atmosphere.

Then, a water supply period tw is specified (step S604). The water supply period tw is, for example, a period elapsed after the water supply device 104 has started operating. For example, the controller 180 obtains, by using the timekeeper, a time at which step S603 is performed (i.e., water supply start time) and stores the time in the storage device; and the controller 180 obtains, as the water supply period tw, a difference between the stored water supply start time and the current time that is obtained by using the timekeeper at the time of making a determination.

Next, it is determined whether or not the water supply period tw is longer than or equal to a supply period threshold tsw (step S605). For example, the supply period threshold tsw may be set in the following manner: the amount of steam that needs to be supplied to the reformer 108 in order to compensate for a pressure decrease in the hydrogen generator 111 is obtained based on, for example, the degree of decrease in the reformer's temperature T, the volume of the passage in the reformer, and the strength of a sealed portion; and the amount of water that is necessary for generating the obtained amount of steam is divided by the amount of water supplied per unit operation time in a case where the water supply device 104 is operated.

If the determination result in step S605 is No, the flow returns to step S604.

If the determination result in step S605 is Yes, the operation of the water supply device 104 is stopped and the seventh valve is closed (step S606), and the reformer's temperature T is stored as the determination temperature Tth (step S607). In this manner, in the flow from step S603 to step S606, steam is supplied to the gas passage in the hydrogen generator 111 to compensate for a pressure decrease in the hydrogen generator 111 that is caused due to a decrease in the temperature of the hydrogen generator 111 (i.e., pressure compensation operation), with the communication between the gas passage and the atmosphere blocked (i.e., with the fifth valve 160a and the sixth valve 160 closed).

Next, the reformer's temperature T is specified by using the first temperature detector 170 (step S608). Then, it is determined whether T is lower than 0.9 Tth (step S609).

If the determination result in step S609 is No, the flow returns to step S608.

If the determination result in step S609 is Yes, the operations in steps S603 to S606 are performed again. Thereafter, the flow returns to step S607.

When a predetermined time period threshold that is at least equal to the reset period tr or longer has elapsed and the power generation system has shifted to a standby state, the pressure compensation operation using the raw material gas may be performed on the hydrogen generator instead of performing the pressure compensation operation using steam on the hydrogen generator. Moreover, when the predetermined time period threshold that is longer than or equal to the reset period tr has elapsed, the raw material gas purge operation (see Fig. 7) may be performed.

In Variation 3, the pressure compensation operation is performed even while the raw material gas supply operation is stopped. This makes it possible to more effectively reduce a possibility that the hydrogen generator 111 becomes damaged due to a difference between the internal and external pressures of the hydrogen generator 111.

### [Variation 4]

A power generation system according to Variation 4 is configured such that, in the power generation system according to Embodiment 1, the power generation unit includes: a hydrogen generator configured to generate a hydrogen-containing fuel gas by using the raw material gas; and a fuel cell configured to generate electric power by using the fuel gas supplied from the hydrogen generator. Here, the raw material gas supply operation is a supplementary gas supply operation of supplying the raw material gas from the raw material gas supply device to the hydrogen generator when gas contraction occurs in a gas passage of the hydrogen generator due to a temperature decrease in the gas passage.

A power generation system operation method according to Variation 4 includes: generating, by a hydrogen generator, a hydrogen-containing fuel gas by using the raw material gas; and generating, by a fuel cell, electric power by using the fuel gas supplied from the hydrogen generator. Here, the raw material gas supply operation is a supplementary gas supply operation of supplying the raw material gas from the raw material gas supply device to the hydrogen generator when gas contraction occurs in a gas passage of the hydrogen generator due to a temperature decrease in the gas passage.

The power generation system 100 according to Variation 4 is different from the power generation system 100 according to Embodiment 2 in that the power generation system 100 according to Variation 4 is configured without including the sixth valve 160b, such that the gas passage in the power generation unit is in communication with the atmosphere. Other than this difference, the configuration of the power generation system 100 according to Variation 4 is the same as that of the power generation system 100 according to Embodiment 2. Therefore, the description of the same configuration is omitted.

Hereinafter, operations of the power generation system 100 according to Variation 4 are described.

First, when the power generation operation of the power generation system 100 is stopped, heat is radiated to the atmosphere, and thereby a temperature decrease occurs. Accordingly, gas contraction occurs in the gas passage of the power generation unit. Since the gas passage in the hydrogen generator 111 is open to the atmosphere, air from the atmosphere flows into the gas passage. However, by opening the first valve 150 and the second valve 152, the raw material gas is supplied to the gas passage, and as a result, the air that has flowed into the gas passage in the hydrogen generator 111 is discharged to the atmosphere. In this manner, the amount of air inflow into the gas passage in the hydrogen generator 111 is reduced, and accordingly, the degree of oxidation degradation of components used in the gas passage (e.g., pipes or catalysts) in the hydrogen generator 111 is reduced, which is preferable.

It should be noted that, in the above-described operation, the first valve 150 and the second valve 152 correspond to the raw material gas supply device, which performs the raw material gas supply operation. Further, when the first valve 150 and the second valve 152 are opened in the supplementary gas supply operation, the pressure booster 102 may be operated. In this case, the first valve 150, the second valve 152, and the pressure booster 102 correspond to the raw material gas supply device, which performs the raw material gas supply operation.

It should be noted that the timing of supplying the raw material gas from the raw material gas supply device to the gas passage in the power generation unit may be any timing. For example, the raw material gas supply device may repeatedly operate to supply the raw material gas each time a detection value of a temperature detector (not shown) provided at the power generation unit decreases.

### (Embodiment 3)

A power generation system according to Embodiment 3 is configured such that, in the fuel cell system according to Embodiment 1, the power generation unit includes: a hydrogen generator configured to generate a hydrogen-containing fuel gas by using the raw material gas; and a fuel cell configured to generate electric power by using the fuel gas supplied from the hydrogen generator. The power generation system according to Embodiment 3 is configured such that the pressure compensation operation is performed on a gas passage in the fuel cell as the raw material gas supply operation.

A power generation system operation method according to Embodiment 3 is such that the power generation system operation method according to Embodiment 1 includes: generating, by a hydrogen generator, a hydrogen-containing fuel gas by using the raw material gas; generating, by a fuel cell, electric power by using the fuel gas; and performing the pressure compensation operation on a gas passage in the fuel cell as the raw material gas supply operation.

According to the above configuration, for example, damage to the fuel cell that is caused due to a pressure decrease in the fuel cell is suppressed by the pressure compensation operation.

Other than the above features, the configuration of the power generation system according to the present embodiment may be the same as that of any of the power generation systems according to Embodiment 2 and Variations 1 to 3 of Embodiment 2.

Hereinafter, an example of the power generation system according to the present embodiment is described.

The operations and device configuration of the power generation system 100 according to Embodiment 3, except for its raw material gas supply operation, are the same as those previously described in the above examples (Fig. 2 to Fig. 5 are applicable to Embodiment 3). Therefore, the description of such operations and device configuration of the power generation system 100 is omitted.

### [Pressure Compensation Performed on Fuel Cell by Using Raw Material Gas]

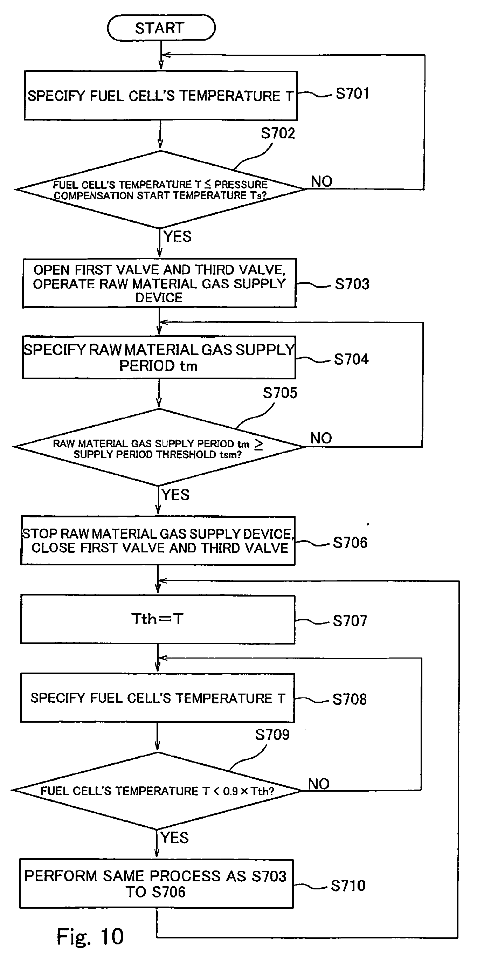

Fig. 10 is a flowchart showing an example of the pressure compensation operation that the power generation system according to Embodiment 3 performs on the fuel cell by using the raw material gas. Hereinafter, the pressure compensation operation according to Embodiment 3 is described with reference to Fig. 10. The operation described below is controlled by the controller 180. The pressure compensation operation shown in Fig. 10, which is performed on the gas passage in the fuel cell by using the raw material gas, is the "raw material gas supply operation" and corresponds to step S207 of Fig. 5.

It should be noted that the pressure compensation operation according to the present embodiment, which is performed on the gas passage of the fuel cell by using the raw material gas, is performed only on the anode-side gas passage of the fuel cell. However, depending on the device configuration, the pressure compensation operation using the raw material gas may be performed on other parts such as the cathode-side gas passage of the fuel cell.

When the pressure compensation operation is started to be performed on the fuel cell by using the raw material gas (START), the fuel cell's temperature T is specified by using a second temperature detector (not shown) (step S701), and it is determined whether or not the fuel cell's temperature T is lower than or equal to the pressure compensation start temperature Ts (step S702). The pressure compensation start temperature Ts is a preset temperature, which is used to determine whether it is necessary or unnecessary to start performing pressure compensation on the anode-side gas passage in the fuel cell 112 by using the raw material gas (i.e., determine whether it is necessary or unnecessary to start supplying the gas to compensate for a pressure decrease in the gas passage that is caused due to a temperature decrease in the gas passage). The pressure compensation start temperature Ts is stored in the storage device of the controller 180. The pressure compensation start temperature Ts may be suitably set depending on the strength of a sealed portion of the fuel cell.

If the determination result in step S702 is No, the flow returns to step S701.

If the determination result in step S702 is Yes, the first valve 150 and the third valve 154 are opened (step S703). Accordingly, the raw material gas is supplied to the anode-side gas passage in the fuel cell 112 (which is, in Fig. 2, the gas passage indicated by a dotted line between the fourth valve 156 and the fifth valve 160a). Here, the first valve 150 and the third valve 154 correspond to the raw material gas supply device, which performs the raw material gas supply operation.

Then, the raw material gas supply period t is specified (step S704). The raw material gas supply period tm is, for example, a period elapsed after the first valve 150 and the third valve 154 are opened. For example, the controller 180 obtains, by using the timekeeper, a time at which step S703 is performed (i.e., raw material gas supply start time) and stores the time in the storage device; and the controller 180 obtains, as the raw material gas supply period tm, a difference between the stored raw material gas supply start time and the current time that is obtained by using the timekeeper at the time of making a determination.

Next, it is determined whether or not the raw material gas supply period tm is longer than or equal to the supply period threshold tsm (step S705). For example, the supply period threshold tsm may be set in the following manner: the amount of raw material gas that needs to be supplied to the reformer 108 in order to compensate for, at least partially, a pressure decrease in the fuel cell 112 is obtained based on, for example, the degree of decrease in the fuel cell's temperature T, the volume of the passage in the fuel cell, and the strength of a sealed portion; and the obtained amount of raw material gas is divided by the flow rate of the raw material gas in a case where the first valve 150 and the third valve 154 are opened.

If the determination result in step S705 is No, the flow returns to step S704.

If the determination result in step S705 is Yes, the first valve 150 and the third valve 154 are closed (step S706), and the fuel cell's temperature T is stored as the determination temperature Tth (step S707). In the flow from step S703 to step S706, the raw material gas is supplied to the anode-side gas passage in the fuel cell 112 to compensate for a pressure decrease in the gas passage that is caused due to a temperature decrease in the gas passage (i.e., pressure compensation operation), with the fifth valve 160a and the sixth valve 160b closed and the communication between the gas passage and the atmosphere blocked. It should be noted that the fourth valve 156 is also closed in the above pressure compensation operation.

Next, the fuel cell's temperature T is specified by using the second temperature detector 270 (step S708). Then, it is determined whether T is lower than 0.9 Tth (step S709).

If the determination result in step S709 is No, the flow returns to step S708.

If the determination result in step S709 is Yes, the operations in steps S703 to S706 are performed again. Thereafter, the flow returns to step S707.

By performing the above-described pressure compensation operation, damage to the fuel cell 112 that is caused due to a difference between the internal and external pressures of the fuel cell 112 is suppressed. Although the above-described pressure compensation operation using the raw material gas is performed on the gas passage in the fuel cell 112 with the first valve 150 and the third valve 154 opened, the present embodiment may include only one of the first valve 150 and the third valve 154, and the raw material gas may be supplied with the one valve opened.

### [Advantageous Effects]

According to the power generation system of the present embodiment, the power generation operation stopped period for avoiding that the microcomputer meter cuts off the gas or gives an abnormality notification can be made shorter as compared to conventional power generation systems in which the pressure compensation operation using the raw material gas is not forcibly stopped.

### [Variation 1: Purging Fuel Cell with Raw Material Gas]

A power generation system according to Variation 1 is configured such that, in the power generation system according to Embodiment 1, the power generation unit includes: a hydrogen generator configured to generate a hydrogen-containing fuel gas by using the raw material gas; and a fuel cell configured to generate electric power by using the fuel gas supplied from the hydrogen generator. The power generation system according to Variation 1 is configured such that the raw material gas purge operation is performed on a gas passage in the fuel cell as the raw material gas supply operation.

A power generation system operation method according to Variation 1 is such that the power generation system operation method according to Embodiment 1 includes: generating, by a hydrogen generator, a hydrogen-containing fuel gas by using the raw material gas; generating, by a fuel cell, electric power by using the fuel gas supplied from the hydrogen generator; and performing the raw material gas purge operation on a gas passage in the fuel cell as the raw material gas supply operation.

According to the above configuration, an occurrence of water blockage in the gas passage of the fuel cell in the power generation unit, which is caused due to condensation water, is suppressed.

Other than the above features, the configuration of the power generation system according to Variation 1 may be the same as that of any of the power generation systems according to Embodiment 2, Variations 1 to 3 of Embodiment 2, and Embodiment 3.

Hereinafter, an example of the power generation system according to the present embodiment is described.

The operations and device configuration of the power generation system 100 according to Variation 1, except for its raw material gas supply operation, are the same as those previously described in the above examples. Therefore, the description of such operations and device configuration of the power generation system 100 is omitted.

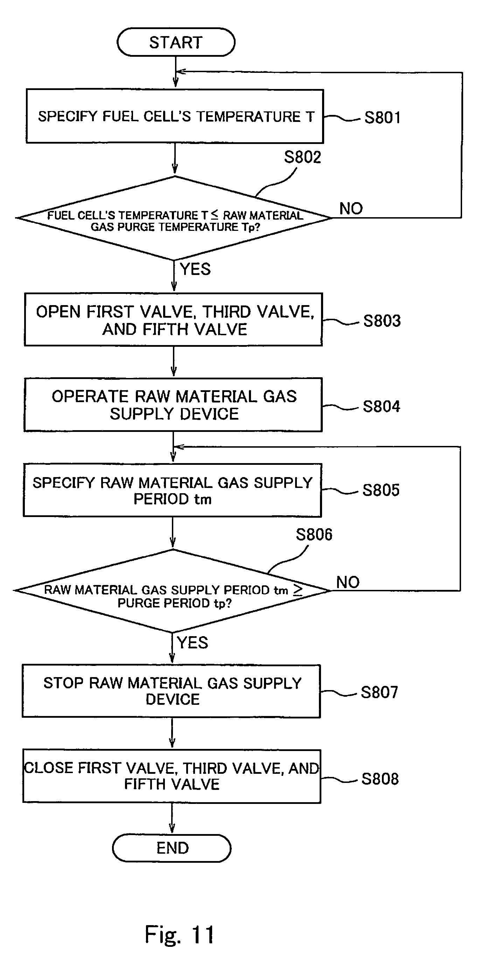

Fig. 11 is a flowchart showing an example of the raw material gas purge operation performed by the power generation system according to Variation 1 of Embodiment 2. In Variation 1, purging the anode-side gas passage of the fuel cell with the raw material gas is performed as the raw material gas supply operation. Hereinafter, the raw material gas purge operation according to Variation 1 is described with reference to Fig. 11. The operation described below is controlled by the controller 180. It should be noted that the raw material gas purge operation shown in Fig. 11 is the "raw material gas supply operation" and corresponds to step S208 of Fig. 5.

It should be noted that the raw material gas purge operation according to the present embodiment, which is performed on the fuel cell by using the raw material gas, is performed only on the anode-side gas passage of the fuel cell. However, depending on the device configuration, the raw material gas purge operation may be performed on other parts such as the cathode-side gas passage of the fuel cell.

When the raw material gas purge operation is started (START), the fuel cell's temperature T is specified by using the second temperature detector (not shown) (step S801), and it is determined whether or not the fuel cell's temperature T is lower than or equal to the raw material gas purge temperature Tp (step S802). The raw material gas purge temperature Tp is a preset temperature, which is used to determine whether to start purging the anode-side gas passage in the fuel cell 112 by using the raw material gas. The raw material gas purge temperature Tp is stored in the storage device of the controller 180. Here, the raw material gas purge temperature Tp is set to such a temperature as not to cause carbon deposition from the raw material gas.

If it is determined NO in step S802, the flow returns to step S801.

If it is determined YES in step S802, the first valve 150, the third valve 154, and the fifth valve 160a are opened (step S803), and the pressure booster 102 is started to operate (step S804). As a result, the raw material gas is supplied to the anode-side gas passage in the fuel cell 112 (i.e., the purging with the raw material gas is started). At the time, the raw material gas supply start time is obtained by using the timekeeper and then stored in the storage device.

Next, the raw material gas supply period tm is specified (step S805), and it is determined whether or not the raw material gas supply period tm is longer than or equal to the purge period tp (step S806). For example, the raw material gas supply period tm may be specified in the following manner: a difference between the stored raw material gas supply start time and the current time that is obtained by using the timekeeper at the time of making a determination is obtained as the raw material gas supply period tm. The purge period tp is a predetermined period which is set such that if the raw material gas is supplied to the anode-side gas passage in the fuel cell 112 at a predetermined flow rate for the purge period tp, then the anode-side gas passage in the fuel cell 112 will be fully purged with the raw material gas. The purge period tp is stored in the storage device of the controller 180, for example.

If the determination result in step S806 is NO, the flow returns to step S805.

If the determination result in step S806 is YES, the pressure booster 102 is stopped (step S807), and the first valve 150, the third valve 154, and the fifth valve 160a are closed (step S808). Then, the raw material gas purge operation ends.

### [Variation 2]

A power generation system according to Variation 2 is configured such that, in either of the power generation systems according to Embodiment 3 and Variation 1 of Embodiment 3, the pressure compensation operation is performed on the gas passage in the fuel cell by using air and/or steam while the raw material gas supply operation is stopped.

A power generation system according to Variation 2 is configured such that, in either of the power generation systems according to Embodiment 3 and Variation 1 of Embodiment 3, the pressure compensation operation is performed on the gas passage in the fuel cell by using air and/or steam while the raw material gas supply operation is stopped.

Other than the above feature, the configuration of the power generation system according to Variation 2 may be the same as that of any of the power generation systems according to Embodiment 2, Variations 1 to 3 of Embodiment 2, Embodiment 3, and Variation 1 of Embodiment 3.

Hereinafter, an example of the power generation system 100 according to Variation 2 is described.

Here, the pressure compensation operation using air is performed by opening the fifth valve 160a provided on the off fuel gas passage 136, with gas supply to the fuel cell from an upstream gas passage blocked (e.g., with the first valve 150, the second valve 152, the third valve 154, and the fourth valve 156 closed). It should be noted that, as an alternative, the fourth valve 156 and the fifth valve 160a may be opened to perform the pressure compensation on both of the fuel cell and the hydrogen generator.

The pressure compensation operation using steam is realized by performing pressure compensation using steam on the hydrogen generator 111 in a manner similar to Variation 3 with the following conditions: the sixth valve 160b, which is provided on a gas passage downstream from the hydrogen generator 111 (i.e., the second bypass passage 134), and the fifth valve 160a provided on the off fuel gas passage 136 are closed; the fourth valve 156 is opened; and the hydrogen generator 111 and the fuel cell 112 are in communication with each other. In this case, the fifth valve 160a and the sixth valve 160b correspond to the valve configured to block the communication between the power generation unit and the atmosphere. It should be noted that, as an alternative, the pressure compensation using steam may be first performed on the hydrogen generator 111, and thereafter, the fourth valve 156 may be opened to bring the hydrogen generator 111 and the fuel cell 112 into communication with each other, so that surplus pressure occurring from the pressure compensation that is performed on the inside of the hydrogen generator 111 by using the steam is supplied to the fuel cell 112. According to the above operation, the pressure compensation using the supply of steam is performed on both of the hydrogen generator and the fuel cell.

### [Variation 3]

A power generation system according to Variation 3 is configured such that, in the power generation system according to Embodiment 1, the power generation unit includes a hydrogen generator configured to generate a hydrogen-containing fuel gas by using the raw material gas; and a fuel cell configured to generate electric power by using the fuel gas supplied from the hydrogen generator. The power generation system according to Variation 3 is configured such that at least one of the pressure compensation operation using the raw material gas and the raw material gas purge operation using the raw material gas is performed on the fuel cell via the hydrogen generator 1 as the raw material gas supply operation.

A power generation system operation method according to Variation 3 is such that the power generation system according to Embodiment 1 includes: generating, by a hydrogen generator, a hydrogen-containing fuel gas by using the raw material gas; generating, by a fuel cell, electric power by using the fuel gas supplied from the hydrogen generator; and performing, using the raw material gas, at least one of the pressure compensation operation and the raw material gas purge operation on the fuel cell via the hydrogen generator as the raw material gas supply operation.

According to the above configuration, at least one of the pressure compensation and the raw material gas purge can be performed on the fuel cell 112 by using the raw material gas with a simple configuration that does not include the first bypass passage 130 and the third valve 154.

Other than the above features, the configuration of the power generation system according to Variation 3 may be the same as that of any of the power generation systems according to Embodiment 2, Variations 1 to 3 of Embodiment 2, Embodiment 3, and Variations 1 and 2 of Embodiment 3. Hereinafter, an example of the power generation system according to the present embodiment is described.

The power generation system 100 according to Variation 3 is different from the power generation system 100 according to Embodiment 3 in that the power generation system 100 according to Variation 3 is configured without including the first bypass passage 130 and the third valve 154. Other than this difference, the device configuration of the power generation system 100 according to Variation 3 is the same as that previously described in the above examples. Therefore, the description of the same configuration is omitted.

The power generation system 100 is configured to open the first valve 150, the second valve 152, and the fourth valve 156, and to close the fifth valve 160a and the sixth valve 160b, at the time of performing the pressure compensation operation on the fuel cell 112. It should be noted that the timing of opening the first valve 150, the second valve 152, and the fourth valve 156 may be any timing. For example, the first valve 150, the second valve 152, and the fourth valve 156 may be opened at the same time, or may be opened sequentially from the most upstream one. In this case, the fifth valve 160a and the sixth valve 160b correspond to the valve configured to block the communication between the power generation unit 1 and the atmosphere.

The power generation system 100 is configured to operate the pressure booster 102 with the first valve 150, the second valve 152, the fourth valve 156, and the fifth valve 160a opened and the sixth valve 160b closed, at the time of performing the raw material gas purge operation on the fuel cell 112.

### [Variation 4]

A power generation system according to Variation 4 is configured such that, in the power generation system according to Embodiment 1, the power generation unit includes a hydrogen generator configured to generate a hydrogen-containing fuel gas by using the raw material gas; and a fuel cell configured to generate electric power by using the fuel gas supplied from the hydrogen generator. Here; the raw material gas supply operation is a supplementary gas supply operation of supplying the raw material gas from the raw material gas supply device to the hydrogen generator when gas contraction occurs in gas passages of the hydrogen generator and the fuel cell due to temperature decreases in the gas passages.

A power generation system operation method according to Variation 4 includes: generating, by a hydrogen generator, a hydrogen-containing fuel gas by using the raw material gas; and generating, by a fuel cell, electric power by using the fuel gas supplied from the hydrogen generator. Here, the raw material gas supply operation is a supplementary gas supply operation of supplying the raw material gas from the raw material gas supply device to gas passages of the hydrogen generator and the fuel cell when gas contraction occurs in the gas passages due to temperature decreases in the gas passages.

The power generation system 100 according to Variation 4 is different from the power generation system 100 according to Embodiment 3 in that the power generation system 100 according to Variation 4 is configured without including the fourth valve 156 and the fifth valve 160a, such that the gas passage in the power generation unit is in communication with the atmosphere. Other than this difference, the configuration of the power generation system 100 according to Variation 4 is the same as that of the power generation system 100 according to Embodiment 3. Therefore, the description of the same configuration is omitted.

Hereinafter, operations of the power generation system 100 according to Variation 4 are described.

First, when the power generation operation of the power generation system 100 is stopped, heat is radiated to the atmosphere, and thereby a temperature decrease occurs. Accordingly, gas contraction occurs in the gas passage of the power generation system 100. Since the gas passage in the power generation unit is open to the atmosphere, air from the atmosphere flows into the gas passage. However, by opening the first valve 150 and the second valve 152, the raw material gas is supplied to the gas passage, and as a result, the air that has flowed into the gas passage is discharged to the atmosphere. In this manner, the amount of air inflow into the gas passage in the power generation unit is reduced, and accordingly, the degree of oxidation degradation of components used in the gas passage (e.g., pipes or catalysts) in the power generation unit is reduced, which is preferable.

It should be noted that, in the above-described operation, the first valve 150 and the second valve 152 correspond to the raw material gas supply device, which performs the raw material gas supply operation. Further, when the first valve 150 and the second valve 152 are opened in the supplementary gas supply operation, the pressure booster 102 may be operated. In this case, the first valve 150, the second valve 152, and the pressure booster 102 correspond to the raw material gas supply device, which performs the raw material gas supply operation.

It should be noted that the timing of supplying the raw material gas from the raw material gas supply device to the gas passage in the power generation unit may be any timing. For example, the raw material gas supply device may repeatedly operate to supply the raw material gas each time a detection value of a temperature detector (not shown) provided at the power generation unit decreases.

### (Embodiment 4)

A power generation system according to Embodiment 4 is configured such that, in the power generation system according to Embodiment 1, the power generation unit includes a fuel cell. The power generation system according to Embodiment 4 is configured such that the pressure compensation operation is performed on a gas passage in the fuel cell.

A power generation system operation method according to Embodiment 4 is such that the power generation system operation method according to Embodiment 1 includes: generating electric power by a fuel cell; and performing the pressure compensation operation on a gas passage in the fuel cell as the raw material gas supply operation.

Hereinafter, an example of the power generation system according to the present embodiment is described.

### [System Configuration]

In Embodiment 4, the fuel cell is of an internal reforming type. Embodiment 4 is different from Embodiment 2 and Embodiment 3 in that a solid oxide fuel cell (SOFC) is used in Embodiment 4.

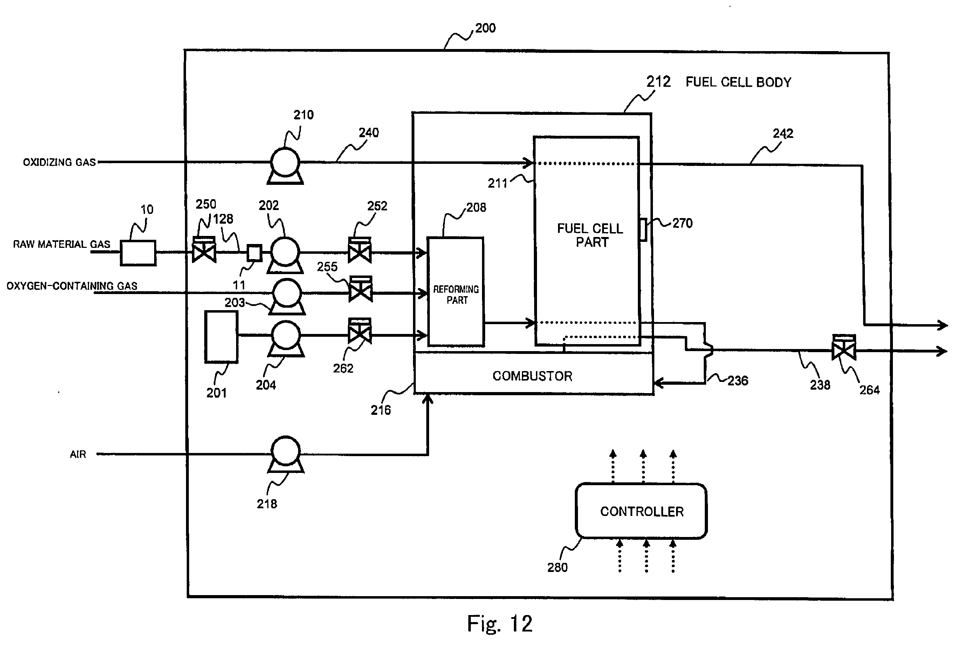

Fig. 12 shows an example of a schematic configuration of the power generation system according to Embodiment 4. A power generation system 200 according to the present embodiment is a fuel cell system.

As shown in Fig. 12, the power generation system 200 mainly includes a pressure booster 202, an oxygen-containing gas supply device 203, a water supply device 204, a fuel cell body 212 including a reforming part 208 and a fuel cell part 211, an oxidizing gas supply device 210, a DC/AC converter (not shown), a combustor 216, an air supply device 218, and a controller 280.

The configurations and functions of the pressure booster 202, the water supply device 204, the oxidizing gas supply device 210, the DC/AC converter (not shown), the combustor 216, the air supply device 218, and the controller 280 are the same as those of the pressure booster 102, the water supply device 104, the oxidizing gas supply device 110, the DC/AC converter (not shown), the combustor 116, the air supply device 118, and the controller 180 according to Embodiment 2. Therefore, the description of these components is omitted.

The pressure booster 202 is connected to the reforming part 208. The reforming part 208 is connected to an anode (an anode-side gas passage) of the fuel cell part 211. The anode (the anode-side gas passage) of the fuel cell 112 is connected to the combustor 216 via an off fuel gas passage 236. The combustor 216 is in communication with the outside of the power generation system 200 via a flue gas passage 238 (i.e., open to the atmosphere). The oxidizing gas supply device 210 is connected to a cathode (a cathode-side gas passage) of the fuel cell part 211 via an oxidizing gas supply passage 240. The cathode (the cathode-side gas passage) is in communication with the outside of the power generation system 200 via an off oxidizing gas passage 242 (i.e., open to the atmosphere).

A passage that connects the gas meter 10 and the pressure booster 202 is provided with a first valve 250. A passage that connects the pressure booster 202 and the reforming part 208 is provided with a second valve 252. A passage that connects the oxygen-containing gas supply device 203 and the reforming part 208 is provided with a third valve 255. A passage that connects the water supply device 204 and the reforming part 208 is provided with a seventh valve 262. The flue gas passage 238 is provided with an eighth valve 264. The first valve 250, the second valve 252, the third valve 255, the seventh valve 262, and the eighth valve 264 are on-off valves (e.g., solenoid valves). Each on-off valve is configured to open and close a passage on which the on-off valve is provided. It should be noted that although a raw material gas passage through which the raw material gas flows is provided with the first valve 250 and the second valve 252, the raw material gas passage may be provided with only one of the first valve 250 and the second valve 252.

The fuel cell part 211 is provided with the second temperature detector 270 configured to detect the temperature of the fuel cell part 211. A position at which the second temperature detector 270 is disposed is not particularly limited. As one example, the second temperature detector 270 may be provided on a gas passage between the reforming part 208 and the fuel cell part 211. Although in the above example a solid oxide fuel cell of an indirect reforming type is shown, the present embodiment may be applied to a solid oxide fuel cell of a direct reforming type, in which a reforming reaction and a power generating reaction occur on the same catalyst. In this case, except that the reforming part and the power generating part of the fuel cell are integrated, the fuel cell body 212 is configured in the same manner.

In the present embodiment, the power generation unit is the fuel cell body 212.

Since the gas meter 10 is the same as the gas meter 10 in Embodiment 2, the description thereof is omitted.

### [Power Generation Operation]

Described below are operations that the power generation system 200 performs at the time of performing a power generation operation. The operations described below are controller by the controller 280.

At the time of performing the power generation operation, the first valve 250, the second valve 252, the third valve 255, the seventh valve 262, and the eighth valve 264 are controlled to be in an opened state (i.e., they are opened).

The raw material gas supplied from the raw material gas source is, after passing through the gas meter 10, supplied to the reforming part 208 by the pressure booster 202. The oxygen-containing gas supply device 203 supplies an oxygen-containing gas such as air to the reforming part 208. The water supply device 204 supplies the reforming part 208 with water that the water supply device 204 receives from a water tank 201. The reforming part 208 generates steam by evaporating the water, and causes a reaction between the raw material gas and the steam (steam reforming: CH₄+H₂O→3H₂+CO). The oxygen-containing gas is necessary for partial oxidation reforming (CH₄+O₂→2H₂+CO₂). Through the steam reforming or partial oxidation reforming, the reforming part 208 generates a hydrogen-containing gas (i.e., a gas containing H₂ gas) from the raw material gas.

The hydrogen-containing gas is supplied from the reforming part 208 to the anode of the fuel cell part 211. The oxidizing gas supply device 210 supplies air as an oxidizing gas to the cathode of the fuel cell part 211. The fuel cell part 211 allows the hydrogen-containing gas supplied from the reforming part 208 to flow to the anode and allows the air supplied from the oxidizing gas supply device 210 to flow to the cathode, thereby generating electric power.

A gas discharged from the anode of the fuel cell (i.e., an off fuel gas) is supplied to the combustor 216 through the off fuel gas passage 236. The combustor 216 combusts the off fuel gas by using air supplied from the air supply device 218, thereby heating the reforming part 208 and the fuel cell part 211. A flue gas that is discharged from the combustor 216 is discharged to the outside of the power generation system 100 through the flue gas passage 238.

A gas that is discharged from the cathode of the fuel cell is discharged to the outside of the power generation system 200 through the off oxidizing gas passage 242.

### [Determination of Gas Supply Abnormality]

The description of the determination of gas supply abnormality is omitted since it is the same as in Embodiment 2 (see Fig. 4).

### [Stop Operation]

The description of the stop operation is omitted since it is the same as previously described in the above examples except for the following points: in step S201 of Fig. 5, the oxygen-containing gas supply device 203 is also stopped; and in step S202, the first valve 250, the second valve 252, the third valve 255, the seventh valve 262, and the eighth valve 264 are closed.

### [Pressure Compensation Performed on Fuel Cell by Using Raw Material Gas]

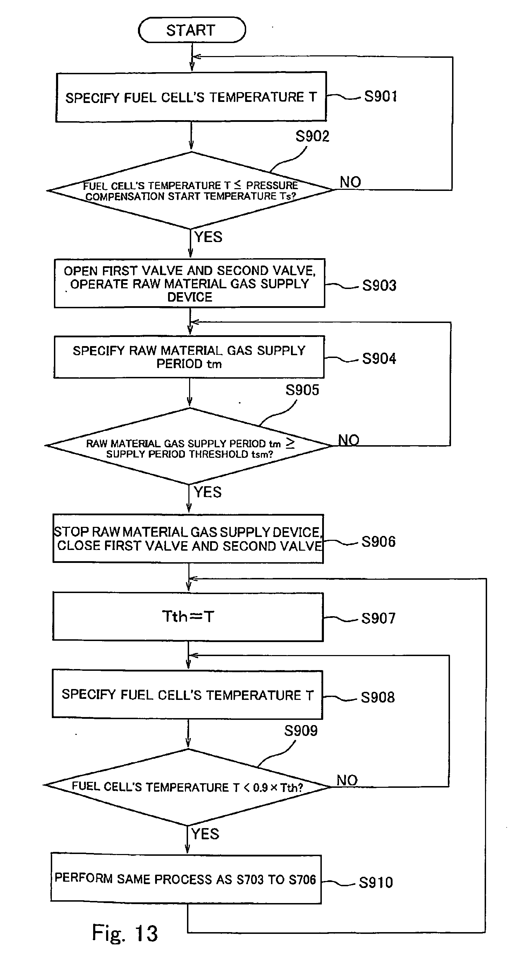

Fig. 13 is a flowchart showing an example of the pressure compensation operation that the power generation system according to Embodiment 4 performs on the fuel cell body by using the raw material gas. Hereinafter, the pressure compensation operation according to Embodiment 4 is described with reference to Fig. 13. The operation described below is controlled by the controller 180. The pressure compensation operation shown in Fig. 13, which is performed on the fuel cell body by using the raw material gas, is the "raw material gas supply operation" and corresponds to step S207 of Fig. 5.

It should be noted that the pressure compensation operation according to the present embodiment, which is performed on the fuel cell body by using the raw material gas, is performed on the anode-side gas passage of the fuel cell part 211 and a gas passage of the reforming part 208. However, depending on the device configuration, the pressure compensation operation using the raw material gas may be performed on other parts such as the cathode-side gas passage of the fuel cell part 211.

When the pressure compensation operation is started to be performed on the fuel cell by using the raw material gas (START), the fuel cell's temperature T is specified by using the second temperature detector 270 (step S901), and it is determined whether or not the fuel cell's temperature T is lower than or equal to the pressure compensation start temperature Ts (step S902). The pressure compensation start temperature Ts is a preset temperature, which is used to determine whether it is necessary or unnecessary to start performing pressure compensation on a gas passage (a gas passage extending through the reforming part 208 and the anode side of the fuel cell part 211; the same hereinafter) of the fuel cell body 212 by using the raw material gas (i.e., determine whether it is necessary or unnecessary to start supplying the gas to compensate for a pressure decrease in the gas passage that is caused due to a temperature decrease in the gas passage). The pressure compensation start temperature Ts is stored in the storage device of the controller 280. The pressure compensation start temperature Ts may be suitably set depending on the strength of a sealed portion of the fuel cell body 212.

If the determination result in step S902 is No, the flow returns to step S901.

If the determination result in step S902 is Yes, the first valve 250 and the second valve 152 are opened with the eighth valve 264 closed (step S903). Accordingly, the raw material gas is supplied to the gas passage of the fuel cell body 212. In this case, the first valve 150 and the second valve 152 correspond to the raw material gas supply device, which performs the raw material gas supply operation, and also, the eighth valve 264 corresponds to the valve configured to block the communication between the power generation unit 1 and the atmosphere.

Then, the raw material gas supply period t is specified (step S904). The raw material gas supply period tm is, for example, a period elapsed after the first valve 250 and the second valve 152 are opened. For example, the controller 280 obtains, by using the timekeeper, a time at which step S903 is performed (i.e., raw material gas supply start time) and stores the time in the storage device; and the controller 280 obtains, as the raw material gas supply period tm, a difference between the stored raw material gas supply start time and the current time that is obtained by using the timekeeper at the time of making a determination.

Next, it is determined whether or not the raw material gas supply period tm is longer than or equal to the supply period threshold tsm (step S905). For example, the supply period threshold tsm may be set in the following manner: the amount of raw material gas that needs to be supplied to the gas passage of the fuel cell body 212 in order to compensate for a pressure decrease in the fuel cell body 212 is obtained based on, for example, the degree of decrease in the fuel cell's temperature T and the volume of the gas passage of the fuel cell body 212; and the obtained amount of raw material gas is divided by the flow rate of the raw material gas in a case where the first valve 250 and the second valve 152 are opened.

It the determination result in step S905 is No, the flow returns to step S904.

If the determination result in step S905 is Yes, the first valve 250 and the second valve 152 are closed (step S906), and the fuel cell's temperature T is stored as the determination temperature Tth (step S907). From step S903 to step S906, the raw material gas is supplied to the gas passage of the fuel cell body 212 to compensate for a pressure decrease in the gas passage that is caused due to a temperature decrease in the gas passage (i.e., pressure compensation operation), with the communication between the gas passage and the atmosphere blocked.

Next, the fuel cell's temperature T is specified by using the second temperature detector (step S908). Then, it is determined whether T is lower than 0.9 Tth (step S909).

If the determination result in step S909 is No, the flow returns to step S908.

If the determination result in step S909 is Yes, the operations in steps S903 to S906 are performed again. Thereafter, the flow returns to step S907.

By performing the above-described pressure compensation operation, damage to the fuel cell body 212 that is caused due to a difference between the internal and external pressures of the fuel cell body 212 is suppressed.

### [Advantageous Effects]

According to the power generation system of the present embodiment, the power generation operation stopped period for avoiding that the microcomputer meter cuts off the gas or gives an abnormality notification can be made shorter as compared to conventional power generation systems in which the pressure compensation operation using the raw material gas is not forcibly stopped.

### [Variations]

Also according to the present embodiment, variations similar to those of Embodiments 2 and 3 can be devised (i.e., a variation in which purging with the raw material gas is performed as the raw material gas supply operation, a variation in which the pressure compensation operation that uses steam or air is performed during the raw material gas supply stopped period, and a variation in which the supplementary gas supply operation is performed as the raw material gas supply operation.

In the case of performing the pressure compensation operation using air, the controller 280 opens the eighth valve 264 as necessary to supply air to the gas passage of the power generation unit, thereby performing the pressure compensation.

In the case of performing the supplementary gas supply operation, the power generation system is not provided with the eighth valve 264, and the controller 280 opens the first valve 250 and the second valve 252 to perform the supplementary supplying of the raw material gas when gas contraction occurs in the gas passage due to a decrease in the temperature of the power generation unit (the fuel cell body 212). It should be noted that the controller 280 may operate the pressure booster 202 when opening these valves.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art.

### Industrial Applicability

The power generation system according to the present invention, when applied to a fuel cell system that performs a predetermined raw material gas supply operation when its power generation operation is stopped, is useful since the power generation system is capable of reducing, as compared to conventional power generation systems, the power generation operation stopped period which is a period for avoiding that the microcomputer meter cuts off the gas or gives an abnormality notification.

### Reference Signs List

- 1: power generation unit
- 2: raw material gas supply device
- 10: gas meter
- 11: raw material gas flow meter
- 50: power generation system
- 100: power generation system
- 101: water tank
- 102: pressure booster
- 104: water supply device
- 106: evaporator
- 108: reformer
- 110: oxidizing gas supply device
- 111: hydrogen generator
- 112: fuel cell
- 116: combustor
- 118: air supply device
- 128: raw material gas passage
- 130: first bypass passage
- 132: hydrogen-containing gas supply passage
- 134: second bypass passage
- 136: off fuel gas passage
- 138: flue gas passage
- 140: oxidizing gas supply passage
- 142: off oxidizing gas passage
- 150: first valve
- 152: second valve
- 154: third valve
- 156: fourth valve
- 160: valve
- 160a: fifth valve
- 160b: sixth valve
- 162: seventh valve
- 170: first temperature detector
- 180: controller
- 200: power generation system
- 201: water tank
- 202: pressure booster
- 203: oxygen-containing gas supply device
- 204: water supply device
- 208: reforming part
- 210: oxidizing gas supply device
- 211: fuel cell part
- 212: fuel cell body
- 216: combustor
- 218: air supply device
- 236: off fuel gas passage
- 238: flue gas passage
- 240: oxidizing gas supply passage
- 242: off oxidizing gas passage
- 250: first valve
- 252: second valve
- 255: third valve
- 262: seventh valve
- 264: eighth valve
- 270: second temperature detector
- 280: controller

## Claims

1. A power generation system comprising:
a power generation unit configured to generate electric power by consuming a raw material gas that has passed through a gas meter, the gas meter being configured to, if a state where continuously stopping a flow of the raw material gas for a reset period or longer is not performed has continued for a first upper limit period or longer, perform at least one of outputting an abnormality indication signal and blocking the flow of the raw material gas;
a raw material gas supply device configured to supply the raw material gas to the power generation unit; and
a controller, wherein
the controller is configured to:
perform a raw material gas supply operation of supplying the raw material gas from the raw material gas supply device to the power generation unit in a case of performing normal stopping of a power generation operation; and
stop the power generation operation, and stop the raw material gas supply operation until at least the reset period elapses, in a case where gas supply abnormality in which said state continues for a second upper limit period or longer has occurred, the second upper limit period being shorter than the first upper limit period.

2. The power generation system according to claim 1, wherein
the raw material gas supply operation is a raw material gas purge operation of purging a gas passage in the power generation unit with the raw material gas.

3. The power generation system according to claim 1, wherein
the raw material gas supply operation is a supplementary gas supply operation of supplying the raw material gas from the raw material gas supply device to a gas passage in the power generation unit when gas contraction occurs in the gas passage due to a temperature decrease in the gas passage.

4. The power generation system according to claim 1, wherein
the power generation system is configured such that communication between a gas passage in the power generation unit and the atmosphere is blocked when the power generation operation is stopped, and
the raw material gas supply operation is a pressure compensation operation of supplying the raw material gas from the raw material gas supply device to the gas passage in the power generation unit, with the communication between the gas passage and the atmosphere blocked, when a pressure decrease occurs in the gas passage due to a temperature decrease in the gas passage.

5. The power generation system according to claim 4, comprising
a valve configured to block the communication between the gas passage and the atmosphere, wherein
the controller is configured to close the valve to block the communication between the gas passage and the atmosphere.

6. The power generation system according to claim 5, wherein
the controller is configured to open the valve to supply air to the gas passage when the pressure decrease due to the temperature decrease in the gas passage occurs, at least while the raw material gas supply operation is stopped due to the gas supply abnormality.

7. The power generation system according to claim 4, comprising
a steam supply device configured to supply steam, wherein
the power generation system is configured such that the communication between the gas passage in the power generation unit and the atmosphere is blocked when the power generation operation is stopped, and
the controller is configured to cause, while the raw material gas supply operation is stopped due to the gas supply abnormality, the steam supply device to supply steam to the gas passage in the power generation unit, with the communication between the gas passage and the atmosphere blocked, when the pressure decrease due to the temperature decrease in the gas passage occurs.

8. The power generation system according to claim 1, wherein
the controller is configured to perform a raw material gas purge operation of purging a gas passage in the power generation unit with the raw material gas in a case where restarting is not to be performed after stopping the raw material gas supply operation for the reset period or longer due to the gas supply abnormality.

9. The power generation system according to claim 2 or claim 8, wherein
the power generation unit includes a fuel cell, and
the power generation system is configured such that the raw material gas purge operation is performed on a gas passage in the fuel cell.

10. The power generation system according to claim 2 or claim 8, wherein
the power generation unit includes: a hydrogen generator configured to generate a hydrogen-containing fuel gas by using the raw material gas; and a fuel cell configured to generate electric power by using the fuel gas supplied from the hydrogen generator, and
the power generation system is configured such that the raw material gas purge operation is performed on at least one of a gas passage of the hydrogen generator and a gas passage of the fuel cell.

11. The power generation system according to claim 3, wherein
the power generation unit includes a fuel cell, and
the power generation system is configured such that the supplementary gas supply operation is performed on a gas passage in the fuel cell.

12. The power generation system according to claim 3, wherein
the power generation unit includes: a hydrogen generator configured to generate a hydrogen-containing fuel gas by using the raw material gas; and a fuel cell configured to generate electric power by using the fuel gas supplied from the hydrogen generator, and
the power generation system is configured such that the supplementary gas supply operation is performed on at least one of a gas passage of the hydrogen generator and a gas passage of the fuel cell.

13. The power generation system according to any one of claims 4 to 7, wherein
the power generation unit includes a fuel cell, and
the power generation system is configured such that the pressure compensation operation is performed on a gas passage in the fuel cell.

14. The power generation system according to any one of claims 4 to 7, wherein
the power generation unit includes: a hydrogen generator configured to generate a hydrogen-containing fuel gas by using the raw material gas; and a fuel cell configured to generate electric power by using the fuel gas supplied from the hydrogen generator, and
the power generation system is configured such that the pressure compensation operation is performed on at least one of a gas passage of the hydrogen generator and a gas passage of the fuel cell.

15. A power generation system operation method according to the present invention comprising:
generating, by a power generation unit, electric power by consuming a raw material gas that has passed through a gas meter, the gas meter being configured to, if a state where continuously stopping a flow of the raw material gas for a reset period or longer is not performed has continued for a first upper limit period or longer, perform at least one of outputting an abnormality indication signal and blocking the flow of the raw material gas;
performing a raw material gas supply operation of supplying the raw material gas from a raw material gas supply device to the power generation unit in a case of performing normal stopping of a power generation operation; and
stopping the power generation operation of the power generation unit, and stopping the raw material gas supply operation until at least the reset period elapses, in a case where gas supply abnormality in which said state continues for a second upper limit period or longer has occurred, the second upper limit period being shorter than the first upper limit period.
